# EUROPEAN PATENT APPLICATION

(11) **EP 2 940 643 A1**
(43) Date of publication of application: **04.11.2015**
(21) Application number: 13866819.9
(22) Date of filing: 22.10.2013
(51) Int. Cl.: G06Q 20/40

(54) **PAYMENT MANAGEMENT DEVICE, INFORMATION PROCESSING DEVICE, PAYMENT MANAGEMENT METHOD, AND PAYMENT MANAGEMENT SYSTEM**

(30) Priority: 26.12.2012 JP 2012283315
(71) Applicant: FeliCa Networks, Inc., Tokyo 141-0032 (JP)
(72) Inventor: MIYAZAWA, Aya, Tokyo 141-0032 (JP)
(74) Representative: Witte, Weller & Partner Patentanwälte mbB
(86) International application number: PCT/JP2013/078591
(87) International publication number: WO 2014/103487

(57) **Abstract**

Provided is a settlement management apparatus that performs a process related to settlement using an electronic value associated with a virtual money collection container in which a plurality of managers related to the settlement are set.

## Description

### Technical Field

The present disclosure relates to a settlement management apparatus, an information processing apparatus, a settlement management method, and a settlement management system.

### Background Art

Technologies capable of allotting one bill among a plurality of users and performing settlement thereof have been developed. For example, the technology disclosed in Patent Literature 1 and the technology disclosed in Patent Literature 2 can be exemplified as technologies capable of allotting one bill among a plurality of users and performing settlement thereof.

### Citation List

### Patent Literature

- Patent Literature 1:: JP 2008-186297A
- Patent Literature 2:: JP 2008-134964A

### Summary of Invention

### Technical Problem

For example, in the technology disclosed in Patent Literature 1, one portable terminal transfers an electronic value (money or data having a value equivalent to money) corresponding to the amount of money borne by the user of the one portable terminal to another portable terminal. For example, in the technology disclosed in Patent Literature 1, the other portable terminal performs settlement with a Point-of-Sales (POS) terminal according to an electronic value corresponding to the amount of money obtained by adding the amount of money borne by the user of the one portable terminal and the amount of money borne by the user of the other portable terminal. For example, in the technology disclosed in Patent Literature 1, the POS terminal communicates with a server and the settlement is completed by updating the electronic value corresponding to the one portable terminal and the electronic value corresponding to the other portable terminal on the server side. Accordingly, for example, when the technology disclosed in Patent Literature 1 is used, there is a possibility of the settlement of one bill being allotted among and performed by the plurality of users.

However, using of the technology disclosed in Patent Literature 1, for example, when the one portable terminal is used to perform another settlement before the settlement performed by the other portable terminal, for example, there is a possibility of a problem occurring in the settlement by the other portable terminal due to mismatch of data in the server. Examples of the problem occurring in the settlement in the other portable terminal include a case in which the one portable terminal performs settlement using the electronic value at a different place before the other portable terminal performs settlement, and thus the electronic value expected to be transferred from the one portable terminal to the other portable terminal may be insufficient.

Accordingly, for example, even when the technology disclosed in Patent Literature 1 is used, it may not be said that the settlement of one bill allotted among and performed by the plurality of users is realized.

For example, in the technology disclosed in Patent Literature 2, when settlement of one bill is performed, a plurality of portable terminals each perform settlement with a POS terminal in sequence according to electronic values corresponding to set payment amounts. For example, in the technology disclosed in Patent Literature 2, the settlement of one bill is completed when the unpaid balance is paid by settlement of each portable terminal. Accordingly, for example, when the technology disclosed in Patent Literature 2 is used, there is a possibility of the settlement of one bill being allotted among and performed by the plurality of users.

However, for example, when the technology disclosed in Patent Literature 2 is used, a time necessary until completion of the settlement may be lengthened, for example, as the number of users among whom the settlement is allotted increases, that is, the number of portable terminals sequentially performing the settlement increases.

Accordingly, for example, when the technology disclosed in Patent Literature 2 is used, there is a concern that convenience for the users may deteriorate.

An embodiment of the present disclosure proposes a novel and improved settlement management apparatus, a novel and improved information processing apparatus, a novel and improved settlement management method, and a novel and improved settlement management system through which settlement of one bill can be allotted among and performed by a plurality of users.

### Solution to Problem

According to the present disclosure, there is provided a settlement management apparatus that performs a process related to settlement using an electronic value associated with a virtual money collection container in which a plurality of managers related to the settlement are set.

According to the present disclosure, there is provided an information processing apparatus including a processing unit configured to generate a virtual money collection container in which a plurality of managers related to settlement are set.

According to the present disclosure, there is provided a settlement management method including a step of performing a process related to settlement using an electronic value associated with a virtual money collection container in which a plurality of managers related to the settlement are set.

According to the present disclosure, there is provided a settlement management system including a settlement management apparatus configured to perform a process related to settlement using an electronic value associated with a virtual money collection container in which a plurality of managers related to the settlement are set, and a manager apparatus capable of communicating with the settlement management apparatus, the manager apparatus being configured to serve as the plurality of managers. The settlement management apparatus includes an authentication unit configured to authenticate each of the managers, and a processing unit configured to perform the process related to the settlement when authentication for each of the managers is completed.

### Advantageous Effects of Invention

According to an embodiment of the present disclosure, settlement of one bill can be allotted among and performed by a plurality of users.

### Brief Description of Drawings

[FIG. 1] FIG. 1 is an explanatory diagram illustrating a settlement management method according to an embodiment.
[FIG. 2] FIG. 2 is a flowchart illustrating a first example of a management process of a virtual money collection container in a settlement management apparatus according to the embodiment.
[FIG. 3] FIG. 3 is an explanatory diagram illustrating an example of a user interface displayed on a display screen when an application enabling management of a plurality of virtual money collection containers is executed in an information processing apparatus.
[FIG. 4] FIG. 4 is a flowchart illustrating a second example of the management process of the virtual money collection container in the settlement management apparatus according to the embodiment.
[FIG. 5] FIG. 5 is an explanatory diagram illustrating a first example of a process in a settlement management system according to the embodiment.
[FIG. 6] FIG. 6 is an explanatory diagram illustrating a process related to the first example in the settlement management system illustrated in FIG. 5 more specifically.
[FIG. 7] FIG. 7 is an explanatory diagram illustrating a second example of a process in a settlement management system according to the embodiment.
[FIG. 8] FIG. 8 is an explanatory diagram illustrating a third example of a process in a settlement management system according to the embodiment.
[FIG. 9] FIG. 9 is an explanatory diagram illustrating a fourth example of a process in a settlement management system according to the embodiment.
[FIG. 10] FIG. 10 is an explanatory diagram illustrating another example of the process in the settlement management system according to the embodiment.
[FIG. 11] FIG. 11 is an explanatory diagram illustrating examples of icons indicating the virtual money collection containers according to the embodiment.
[FIG. 12] FIG. 12 is an explanatory diagram illustrating another example of the process in the settlement management system according to the embodiment.
[FIG. 13] FIG. 13 is a block diagram illustrating an example of the configuration of the settlement management apparatus according to the embodiment.
[FIG. 14] FIG. 14 is an explanatory diagram illustrating an example of a hardware configuration of the settlement management apparatus according to the embodiment.
[FIG. 15] FIG. 15 is a block diagram illustrating an example of the configuration of the information processing apparatus according to the embodiment.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

Hereinafter, the description will be made in the following order.
1. Settlement management method according to embodiment
2. Settlement management system according to embodiment
3. Program according to embodiment

### (Settlement management method according to embodiment)

A settlement management method according to an embodiment will be first described before the configuration of each apparatus such as a settlement management apparatus included in a settlement management system according to the embodiment is described. Hereinafter, the settlement management method according to the embodiment will be described exemplifying a case in which the settlement management apparatus according to the embodiment performs a process related to the settlement management method according to the embodiment.

### [1] Overview of settlement management method according to embodiment

As described above, for example, even when the technology disclosed in Patent Literature 1 is used, the settlement of one bill allotted among and performed by the plurality of users may not be realized. For example, when the technology disclosed in Patent Literature 2 is used, there is a concern that convenience for the users may deteriorate.

Accordingly, in the settlement management system according to the embodiment, the settlement management apparatus according to the embodiment performs a process related to settlement using an electronic value associated with a virtual money collection container.

Here, the virtual money collection container according to the embodiment refers to a virtual container in which an electronic value with which the settlement management apparatus according to the embodiment performs settlement is virtually input. For example, a region provided in a recording medium or an account at a financial institution can be exemplified as the virtual money collection container according to the embodiment.

For example, the electronic value according to the embodiment refers to money or data having a value equivalent to money. For example, when the settlement management apparatus according to the embodiment is an account at a financial institution, data indicating a value representing a balance of the account can be exemplified as the electronic value according to the embodiment.

Virtually putting the electronic value in the virtual money collection container according to the embodiment means, for example, associating the virtual money collection container according to the embodiment with the electronic value by storing the electronic value in a region of a recording medium corresponding to the virtual money collection container according to the embodiment. Further, virtually putting the electronic value in the virtual money collection container according to the embodiment may mean, for example, associating the virtual money collection container according to the embodiment with the electronic value using a table or the like.

A plurality of managers related to the settlement are set for the virtual money collection container according to the embodiment. Here, examples of the managers according to the embodiment include a user responsible for settlement and an information processing apparatus (hereinafter referred to as "manager apparatus") serving as a manager in relation to settlement, such as an information processing apparatus owned by the user.

For example, a plurality of users or a plurality of information processing apparatuses remit money to the virtual money collection container according to the embodiment, irrespective of whether the users or the information processing apparatuses are managers. Here, the remittance according to the embodiment refers to, for example, addition of an electronic value associated with the virtual money collection container.

More specifically, the settlement management apparatus according to the embodiment authenticates each of the managers set in the virtual money collection container as the process related to the settlement management method according to the embodiment (authentication process). The settlement management apparatus according to the embodiment performs a process related to the settlement using the electronic value associated with the virtual money collection container when the settlement management apparatus completes the authentication for each manager based on the authentication result of each manager (settlement process).

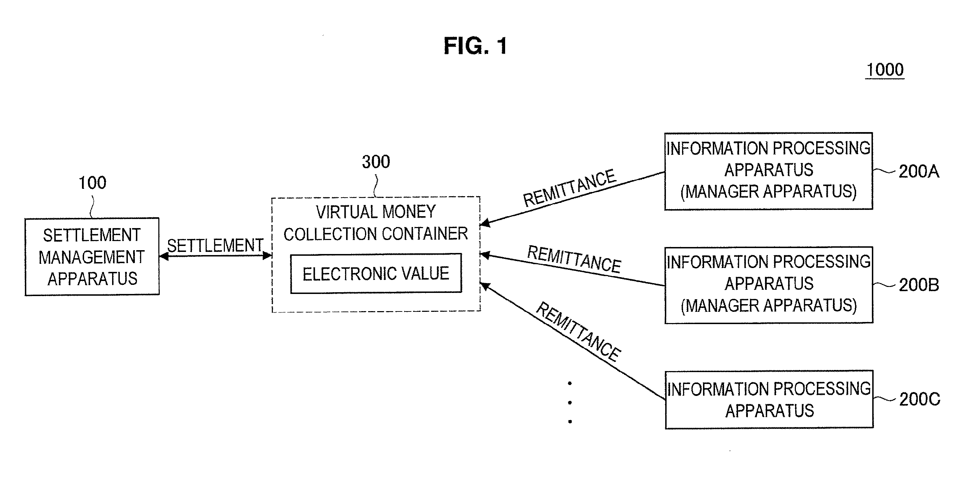

FIG. 1 is an explanatory diagram illustrating a settlement management method according to an embodiment. In FIG. 1, a case in which the managers according to the embodiment are the manager apparatuses are exemplified. More specifically, in FIG. 1, an example of a settlement management system 1000 according to the embodiment which includes a settlement management apparatus 100 and information processing apparatuses 200A, 200B, and 200C serving as the manager apparatuses according to the embodiment is illustrated.

In FIG. 1, a virtual money collection container 300 associated with an electronic value is illustrated. In FIG. 1, the settlement management apparatus 100 and the virtual money collection container 300 are separate apparatuses. However, the virtual money collection container 300 may be stored in a storage unit (which will be described below) included in the settlement management apparatus 100.

For example, as illustrated in FIG. 1, in the settlement management system 1000, each of the information processing apparatuses 200A, 200B, and 200C (hereinafter sometimes collectively referred to as the "information processing apparatuses 200") remits money to the virtual money collection container 300. Accordingly, an electronic value associated with the virtual money collection container 300 is a value obtained by adding values corresponding to a total amount of money of the amounts of money allotted among and paid by the users of the information processing apparatuses 200.

For example, as illustrated in FIG. 1, the settlement management apparatus 100 performs the process related to the settlement using the electronic value associated with the virtual money collection container 300.

Here, as described above, the electronic value associated with the virtual money collection container 300 is a value obtained by adding values corresponding to a total amount of money of the amounts of money allotted among and paid by the users of the information processing apparatuses 200. Accordingly, the settlement performed using the electronic value associated with the virtual money collection container 300 in the settlement management apparatus 100 is equivalent to the settlement allotted among and performed by the users of the information processing apparatuses 200.

Accordingly, the settlement management apparatus 100 performs the process related to the settlement using the electronic value associated with the virtual money collection container so that settlement of one bill allotted among and performed by the plurality of users is realized.

The settlement management apparatus 100 performs, for example, an authentication process and a settlement process as a process related to the settlement management method according to the embodiment, as described above. In the example illustrated in FIG. 1, the settlement management apparatus 100 authenticates each of the information processing apparatuses 200A and 200B (the manager apparatuses). Then, when the settlement management apparatus 100 completes the authentication of each of the information processing apparatuses 200A and 200B (the manager apparatuses), the settlement management apparatus 100 performs the process related to the settlement using the electronic value associated with the virtual money collection container 300.

Here, the settlement management apparatus 100 performs the authentication process and the settlement process as the process related to the settlement management method according to the embodiment, and thus the settlement management apparatus 100 can perform the process related to the settlement based on an authentication result of each manager apparatus. That is, for example, when the authentication process and the settlement process are performed as the process related to the settlement management method according to the embodiment and the information processing apparatuses serving as the manager apparatuses are authenticated rather than the information processing apparatuses corresponding to all of the users among whom the settlement is allotted, the settlement is performed, for example, despite an increase in the number of users among whom the settlement is allotted, that is, an increase in the number of information processing apparatuses corresponding to the users.

Accordingly, for example, when the settlement management apparatus 100 performs the authentication process and the settlement process as the process related to the settlement management method according to the embodiment, a time necessary until completion of the settlement is prevented from being lengthened, for example, despite an increase in the number of users among whom the settlement is allotted. Accordingly, the settlement management apparatus 100 performs, for example, the authentication process and the settlement process as the process related to the settlement management method according to the embodiment, and thus convenience for the users is prevented from deteriorating.

### [2] Process related to settlement management method according to embodiment

Next, an example of the process related to the settlement management method according to the embodiment will be described more specifically. Hereinafter, an example of the process related to the settlement management method according to the embodiment will be described mainly exemplifying a case in which the managers according to the embodiment are the manager apparatuses. Hereinafter, the examples of the process related to the settlement management method according to the embodiment will be described exemplifying a case in which the settlement management apparatus 100 included in the settlement management system 1000 illustrated in FIG. 1 performs the process related to the settlement management method according to the embodiment.

### (1) Authentication process

The settlement management apparatus 100 authenticates each manager set in the virtual money collection container 300.

More specifically, the settlement management apparatus 100 authenticates the manager based on identification information indicating the manager, for example, as will be described in first to fourth examples to be described below.

Here, the identification information according to the embodiment is information (data) which can be used to identify the manager. Examples of the identification information according to the embodiment include user-specific data, such as a Personal Identification Number (PIN) code, input by a user serving as the manager, a unique ID of a secure element provided in the manager apparatus, data indicating a unique identification number of the manager apparatus, and data indicating a kind of manager apparatus (for example, data indicating a maker, a model number, or the like). The identification information according to the embodiment is not limited to the foregoing examples as long as the identification information is information which can be used to identify a user serving as the manager or identify the manager apparatus.

### (1-1) First example of authentication process

The settlement management apparatus 100 authenticates the manager apparatus by matching stored identification information to acquired identification information. For example, when the stored identification information is identical to the acquired identification information, the settlement management apparatus 100 determines that the manager is authenticated normally.

Here, for example, the settlement management apparatus 100 reads the identification information stored in a storage unit (which will be described below) from the storage unit (which will be described below) and uses the identification information for the authentication process, but the identification information stored to be used for the authentication process is not limited to the foregoing identification information. For example, the settlement management apparatus 100 may use identification information stored in a connected external recording medium or a recording medium included in an external apparatus such as a server for the authentication process.

The settlement management apparatus 100 acquires the identification information, for example, by receiving the identification information transmitted from the manager apparatus or receiving the identification information transmitted based on a user operation performed by a user serving as the manager.

The identification information in a storage unit (which will be described below) is recorded, for example, as part of a process of generating the virtual money collection container according to the embodiment, as will be described below.

### (1-2) Second example of authentication process

For example, the settlement management apparatus 100 generates authentication information from the acquired identification information. Then, the settlement management apparatus 100 authenticates the manager by matching authentication information based on the stored identification information to the generated authentication information. For example, when the stored authentication information is identical to the generated authentication information, the settlement management apparatus 100 determines that the manager is authenticated normally.

Here, examples of the authentication information according to the embodiment include key data into which the identification information is converted by any algorithm. The authentication information according to the embodiment is not limited to the key data, but may be any data which can be converted based on the identification information and used for the authentication.

### (1-3) Third example of authentication process

For example, the settlement management apparatus 100 authenticates the manager by matching the authentication information based on the stored identification information to authentication information based on the acquired identification information. For example, when the stored authentication information is identical to the acquired authentication information, the settlement management apparatus 100 determines that the manager is authenticated normally.

### (1-4) Fourth example of authentication process

The authentication process according to the embodiment is not limited to the process in the first example to the process in the third example. For example, in the process in the first example to the process in the third example, the settlement management apparatus 100 may authenticate the manager using the identification information or the authentication information acquired in advance from the manager apparatus before the process related to the settlement starts. Here, examples of "before the process related to the settlement starts" according to the embodiment include "before settlement in a real store" and "before settlement in a virtual store such as an online shop."

For example, the settlement management apparatus 100 performs any one of the process in the first example to the process in the fourth example as the authentication process. The authentication process according to the embodiment is not limited to the process in the first example to the process in the fourth example. The settlement management apparatus 100 may perform, for example, any process enabling the manager to be authenticated as the authentication process.

### (2) Settlement process

In the process (the authentication process) of the foregoing (1), the settlement management apparatus 100 performs a process related to the settlement when the authentication of each manager is completed.

Here, examples of the process related to the settlement according to the embodiment include a subtraction process of subtracting a value related to the settlement from the electronic value associated with the virtual money collection container 300 and a process of notifying an apparatus related to the settlement, such as a manager apparatus or a POS apparatus installed in a store or the like, of the result of the subtraction process.

The settlement process according to the embodiment is not limited to the foregoing process. For example, the settlement management apparatus 100 may perform the process related to the settlement and may subsequently further perform a process related to the virtual money collection container. The process related to the virtual money collection container according to the embodiment may be a process which is part of the process related to the settlement.

### (2-1) First example of process related to virtual money collection container

For example, the settlement management apparatus 100 retains the virtual money collection container 300 when the process related to the settlement is completed.

For example, the user of the virtual money collection container 300 can perform the settlement using the virtual money collection container 300 again by performing the process related to the virtual money collection container in the first example. That is, transferring of the virtual money collection container is realized, for example, by performing the process related to the virtual money collection container in the first example.

The process related to the virtual money collection container according to the embodiment is not limited to the process of retaining the virtual money collection container 300, as in the process in the first example.

### (2-2) Second example of process related to virtual money collection container

For example, the settlement management apparatus 100 may delete the virtual money collection container 300 when the process related to the settlement is completed in addition to the process in the first example and the electronic value associated with the virtual money collection container 300 is zero.

### (2-3) Third example of process related to virtual money collection container

When the effective number of settlements is set in the virtual money collection container 300, for example, the settlement management apparatus 100 may delete the virtual money collection container 300 based on the number of settlements for the virtual money collection container 300 in addition to the process in the first example or the process in the second example. Here, for example, the effective number of settlements according to the embodiment may be the number of times set at the time of the generation of the virtual money collection container 300 or may be the number of times set through a user operation after the generation of the virtual money collection container 300.

More specifically, the settlement management apparatus 100 updates the number of settlements for the virtual money collection container 300, for example, whenever the process related to the settlement using the electronic value associated with the virtual money collection container 300 is completed. When the number of settlements is equal to or greater than the effective number of settlements or the number of settlements is greater than the effective number of settlements, the settlement management apparatus 100 deletes the virtual money collection container 300.

### (2-4) Fourth example of process related to virtual money collection container

The settlement management apparatus 100 may change the managers (when the virtual money collection container 300 is not deleted), for example, when the process related to the settlement is completed in addition to the process in the first example, the process in the second example, or the process in the third process.

Here, examples of the changed managers include some of the managers among the plurality of managers set before the process related to the settlement is performed or users and information processing apparatuses different from the plurality of managers. For example, the changed managers may be set in advance before the process related to the settlement is performed or may be set after the process related to the settlement is performed.

### (2-5) Fifth example of process related to virtual money collection container

The settlement management apparatus 100 moves the electronic value to a storage place corresponding to a specific set manager, for example, when the process related to the settlement is completed.

Here, examples of the storage place corresponding to the specific manager include an account of the specific manager at a financial institution under the user's own name and a recording medium (for example, a secure memory) included in the specific manager apparatus. The storage place corresponding to the specific manager may serve as, for example, a new virtual money collection container.

The settlement management apparatus 100 performs, for example, the process (the authentication process) of the foregoing (1) and the process (the settlement process) of the foregoing (2) as the process related to the settlement management method according to the embodiment.

The process related to the settlement management method according to the embodiment is not limited to the process (the authentication process) of the foregoing (1) and the process (the settlement process) of the foregoing (2). For example, the settlement management apparatus 100 may further perform a process of managing the virtual money collection container, such as generation of a virtual money collection container or changing of the manager set in the virtual money collection container (management process)

### (3) Management process

### (3-1) First example of management process: process of generating virtual money collection container

First, an example of a process of generating a virtual money collection container will be described. For example, the settlement management apparatus 100 generates the virtual money collection container based on a generation request which is a request for generating the virtual money collection container and is transmitted from the information processing apparatus 200 according to the embodiment. That is, in the settlement management system 1000 according to the embodiment, the information processing apparatus 200 causes, for example, the settlement management apparatus 100 to generate the virtual money collection container.

The generation request according to the embodiment is not limited to the direct transmission from the information processing apparatus 200 to the settlement management apparatus 100. For example, the settlement management apparatus 100 may receive the generation request according to the embodiment via another apparatus such as a POS apparatus.

Here, examples of the information processing apparatus 200 transmitting the generation request include the information processing apparatus 200 corresponding to any user. When the generation request is made by the information processing apparatus 200 corresponding to any user, the settlement management system 1000 in which anyone can readily generate a virtual money collection container is realized.

The information processing apparatus 200 transmitting the generation request is not limited to the foregoing information processing apparatus. For example, the information processing apparatus 200 transmitting the generation request may be the information processing apparatus 200 corresponding to a user serving as the manager, such as a user whose personal information is registered. When the information processing apparatus 200 transmitting the generation request is the information processing apparatus 200 corresponding to the user serving as the manager, the information processing apparatus 200 is, for example, one manager apparatus set in the virtual money collection container.

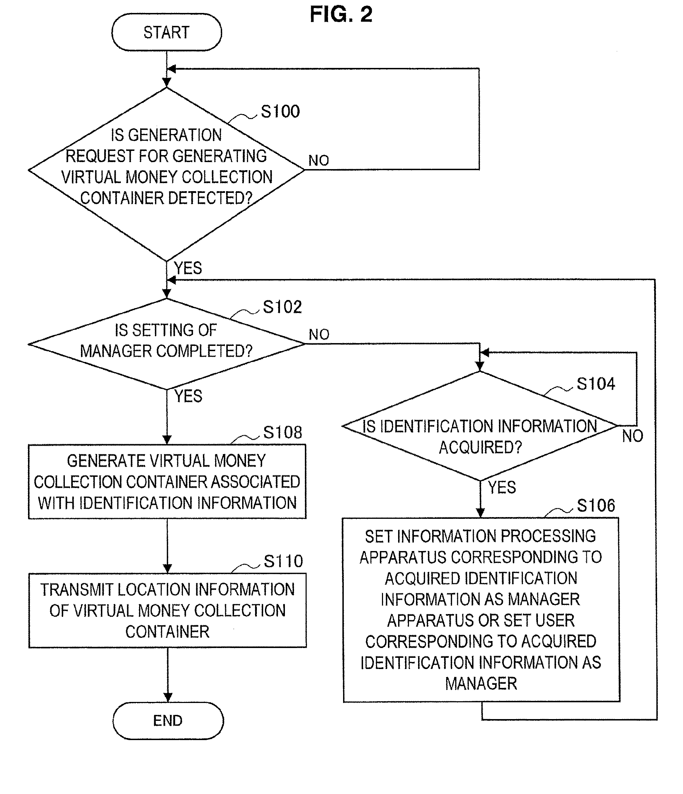

FIG. 2 is a flowchart illustrating a first example of a management process of the virtual money collection container in the settlement management apparatus 100 according to the embodiment. Here, in FIG. 2, an example of a generation process in which the settlement management apparatus 100 generates a virtual money collection container is illustrated.

The settlement management apparatus 100 determines whether the generation request is detected (S100). When it is determined in step S100 that the generation request is not detected, for example, the settlement management apparatus 100 does not proceed with the process until the generation request is determined to be detected.

When it is determined in step S100 that the generation request is detected, for example, the settlement management apparatus 100 determines whether setting of the manager is completed (S102). The settlement management apparatus 100 determines that the setting of the manager is completed, for example, when an end request for ending the setting of the manager is detected or when the setting of the manager starts, the manager is finally set, and a set time passes.

When it determined in step S102 that the setting of the manager is not completed, the settlement management apparatus 100 determines whether the identification information is acquired (S104). Here, for example, the identification information is transmitted from the information processing apparatus 200 to the settlement management apparatus 100 directly (or via a network) to be acquired by the settlement management apparatus 100, but the method of the settlement management apparatus 100 acquiring the identification information is not limited to the foregoing method. For example, when the user holds the information processing apparatus 200 over a reader/writer of a POS apparatus in a store or the like (the user moves the information processing apparatus 200 into a communicable range with the reader/writer), the settlement management apparatus 100 may acquire the identification information via the POS apparatus. For example, the settlement management apparatus 100 may also acquire the identification information by receiving user-specific data such as a PIN code or the like input by a user serving as the manager.

When it is determined in step 104 that the identification information is not acquired, the settlement management apparatus 100 does not proceed with the process until the identification information is determined to be acquired. When the determination is performed in step S104 and the set time passes, for example, the settlement management apparatus 100 may perform the process of step S102 again.

When it is determined in step 104 that the identification information is acquired, the settlement management apparatus 100 sets the information processing apparatus 200 corresponding to the acquired identification information as the manager apparatus (the manager) or sets the user corresponding to the acquired identification information as the manager (S106). Then, the settlement management apparatus 100 repeats the processes from step S102 again.

When it is determined in step S102 that the setting of the manager is completed, for example, the settlement management apparatus 100 generates the virtual money collection container associated with the identification information (S108). By associating the identification information, the information processing apparatus 200 corresponding to the identification information is set as the manager apparatus (manager) or the user corresponding to the identification information is set as the manager in the virtual money collection container. Here, for example, the association of the virtual money collection container with the identification information may be performed in a manner in which the identification information is recorded in the virtual money collection container or the association may be performed using a relational data base (RDB) table or the like.

The information associated with the generated virtual money collection container is not limited to the identification information.

For example, when information indicating a contact address such as an email address of the information processing apparatus 200 or the user is acquired in step S104, for example, the settlement management apparatus 100 may be further associated with the information indicating the contact address to the virtual money collection container.

For example, when the generation request includes information indicating a password used at the time of access to the virtual money collection container, for example, the settlement management apparatus 100 may be further associated with the information indicating the password to the virtual money collection container. When the information indicating the password is associated with the virtual money collection container and when the virtual money collection container is accessed, for example, when money is remitted from the information processing apparatus 200 to the virtual money collection container, authentication is performed using the associated password.

When the process of step S108 is performed, the settlement management apparatus 100 transmits location information indicating the location of the generated virtual money collection container (S110). Here, as the location information according to the embodiment, for example, a Uniform Resource Locator (URL) or an Internet Protocol (IP) address used to access the virtual money collection container can be exemplified. Examples of a target to which the settlement management apparatus 100 transmits the location information include the set manager apparatus and a contact address of a user serving as the set manager.

The information transmitted in step S110 by the settlement management apparatus 100 is not limited to the location information. For example, the settlement management apparatus 100 may generate authentication information based on the identification information and transmit the generated authentication information.

The settlement management apparatus 100 generates the virtual money collection container, for example, by performing the process illustrated in FIG. 2. Needless to say, the process of generating the virtual money collection container according to the embodiment is not limited to the example illustrated in FIG. 2.

Here, for example, the information processing apparatus 200 can manage a plurality of virtual money collection containers corresponding to the information processing apparatuses 200, for example, by an application which can be executed in the information processing apparatus 200. When the virtual money collection container is managed by the foregoing application, for example, the information processing apparatus 200 performs a process such as authentication with the settlement management apparatus 100 via the foregoing application.

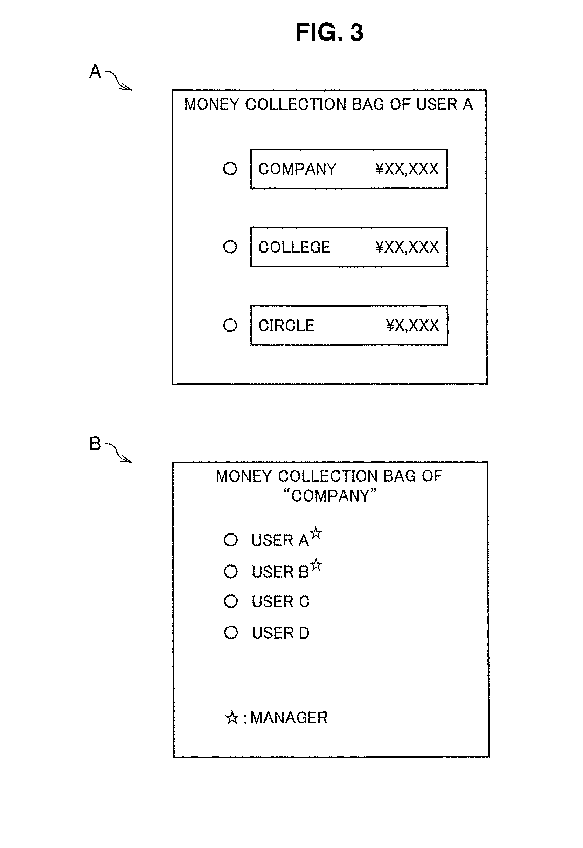

FIG. 3 is an explanatory diagram illustrating an example of a user interface (UI) displayed on a display screen when the application enabling management of the plurality of virtual money collection containers is executed in the information processing apparatus 200. Needless to say, the user interface displayed on the display screen by the application enabling the management of the plurality of virtual money collection containers is not limited to the example illustrated in FIG. 3.

For example, in the example illustrated in A of FIG. 3, three virtual money collection containers, "company," "college," and "circle," are present as the virtual money collection containers in which user A is registered. In A of FIG. 3, an example in which the value of the electronic value associated with each virtual money collection container is indicated as an amount of money is illustrated.

For example, when the virtual money collection container of "company" illustrated in A of FIG. 3 is selected, for example, as illustrated in B of FIG. 3, the display screen transitions to a screen on which one column of users registered in the virtual money collection container is displayed.

An embodiment of the disclosure is not limited to the case in which the virtual money collection container is managed by the foregoing application which can be executed in the information processing apparatus 200. For example, when the user can be managed by the settlement management apparatus 100, for example, when the user using the virtual money collection container is registered, the settlement management apparatus 100 can also manage a plurality of virtual money collection containers corresponding to a certain user.

The electronic value is associated with the generated virtual money collection container by remitting money from the plurality of information processing apparatuses 200, for example, as illustrated in FIG. 1. Here, examples of a notification method and a remittance method for the virtual money collection container in the settlement management system 1000 according to the embodiment will be described.

### <Examples of notification method and remittance method for virtual money collection container>

The manager apparatus or the information processing apparatus owned by the user serving as the manager notifies the information processing apparatuses 200 of the location information by an email or the like. Each of the information processing apparatuses 200 accesses the virtual money collection container with reference to the location information and remits any amount of money. Here, the remittance may be remittance performed using the electronic value stored in a secure element or the like by the information processing apparatus 200 or may be remittance from an account at a financial institution corresponding to the user of the information processing apparatus 200.

The manager apparatus or the information processing apparatus owned by the user serving as the manager notifies the information processing apparatus 200 of the location information and a password by email or the like. Each of the information processing apparatuses 200 accesses the virtual money collection container with reference to the location information and remits any amount of money after completion of the authentication by the password.

The manager apparatus or the information processing apparatus owned by the user serving as the manager performs wireless communication with the information processing apparatus 200 using a communication technology by, for example, Near Field Communication (NFC) and the manager apparatus or the information processing apparatus owned by the user serving as the manager notifies the information processing apparatus 200 of the location information. The information processing apparatus 200 accesses the virtual money collection container with reference to the location information and remits any amount of money.

For example, the user of the information processing apparatus 200 performs user registration via a web site or the like managed by the user of the settlement management apparatus 100. The information processing apparatus 200 accesses the virtual money collection container with reference to the location information acquired through the wireless communication using the communication technology by email or NFC and remits any amount of money (a case in which information regarding the user remitting the amount of money is retained on the side of the settlement management apparatus 100).

For example, the user of the information processing apparatus 200 performs user registration via a web site or the like managed by the user of the settlement management apparatus 100. The registered user is approved by the user serving as the manager such as the user of the manager apparatus. The information processing apparatus 200 accesses the virtual money collection container with reference to the location information acquired by the wireless communication using the communication technology by an email or NFC. When the user of the information processing apparatus 200 is the approved user, the remittance is possible.

### (3-2) Second example of management process: process of changing manager set in virtual money collection container

Next, an example of a changing process of changing the manager set in the virtual money collection container will be described. For example, the settlement management apparatus 100 changes the manager set in the virtual money collection container based on a change request which is transmitted from the information processing apparatus 200 according to the embodiment and is a request for changing the manager set in the virtual money collection container.

The change request according to the embodiment is not limited to direct transmission from the information processing apparatus 200 to the settlement management apparatus 100. For example, the settlement management apparatus 100 may receive the change request according to the embodiment via another apparatus such as a POS apparatus.

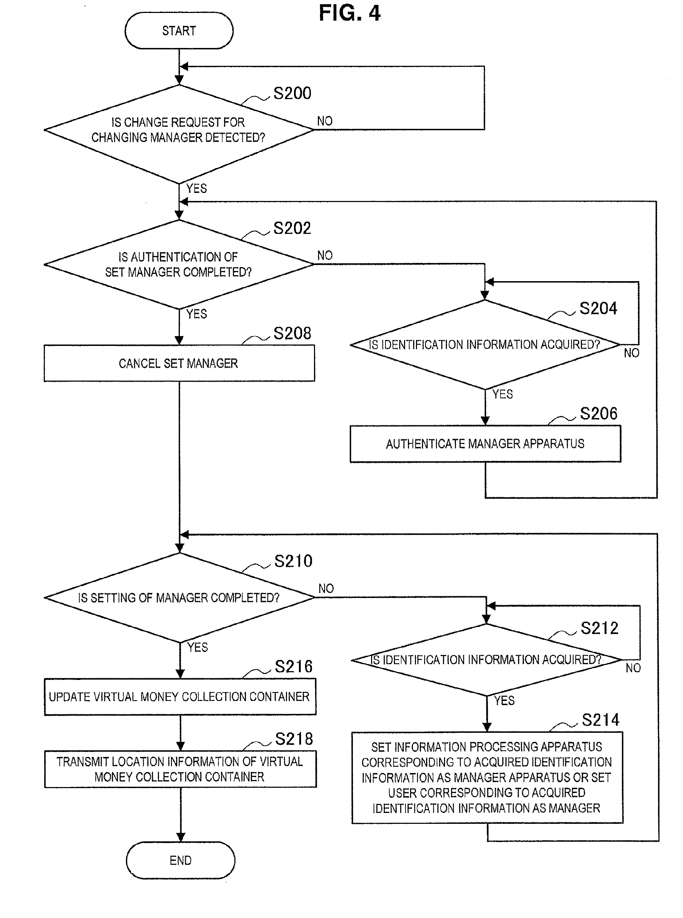

FIG. 4 is a flowchart illustrating a second example of the management process of the virtual money collection container in the settlement management apparatus 100 according to the embodiment. Here, in FIG. 4, an example of the changing process in which the settlement management apparatus 100 changes the manager set in the virtual money collection container is illustrated.

The settlement management apparatus 100 determines whether the change request is detected (S200). When it is determined in step S200 that the change request is not detected, for example, the settlement management apparatus 100 does not proceed with the process until the change request is determined to be detected.

When it is determined in step S200 that the change request is detected, for example, the settlement management apparatus 100 determines whether the authentication of the set manager is completed (S202).

When it is determined in step S202 that the authentication of the set manager is not completed, for example, the settlement management apparatus 100 determines whether the identification information is acquired as in step S104 of FIG. 2 (S204). When it is determined that the authentication of the set manager is not completed despite the fact that the process of step S202 starts and the set time passes, for example, the settlement management apparatus 100 ends the change process.

When it is determined in step S204 that the identification information is not acquired, the settlement management apparatus 100 does not proceed with the process until the identification information is determined to be acquired. When the determination of step S204 is performed and the set time passes, for example, the settlement management apparatus 100 may perform the process of step S202 again.

When it is determined in step S204 that the identification information is acquired, the settlement management apparatus 100 authenticates the manager using the acquired identification information (S206). Here, the settlement management apparatus 100 authenticates whether the information processing apparatus 200 corresponding to the acquired identification information is the manager apparatus (the manager) or the user corresponding to the acquired identification information is the manager, for example, by matching the acquired identification information to the identification information corresponding to the manager set in the virtual money collection container.

When the process of step S206 is performed, the settlement management apparatus 100 repeats the processes from step S202 again.

When it is determined in step S202 that the authentication of the set manager is completed, for example, the settlement management apparatus 100 cancels the manager set in the virtual money collection container (S208).

When the process of step S208 is performed, for example, the settlement management apparatus 100 determines whether the setting of the manager is completed as in step S102 of FIG. 2 (S210).

When it is determined in step S210 that the setting of the manager is not completed, for example, the settlement management apparatus 100 determines whether the identification information is acquired, as in step S104 of FIG. 2 (S212).

When it is determined in step 212 that the identification information is not acquired, the settlement management apparatus 100 does not proceed with the process until the identification information is determined to be acquired. When the determination of step S212 is performed and the set time passes, for example, the settlement management apparatus 100 may perform the process of step S210 again.

When it is determined in step 212 that the identification information is acquired, for example, the settlement management apparatus 100 sets the information processing apparatus 200 corresponding to the acquired identification information as the manager apparatus (the manager) or sets the user corresponding to the acquired identification information as the manager, as in step S106 of FIG. 2 (S214). Then, the settlement management apparatus 100 repeats the processes from step S210 again.

When it is determined in step S210 that the setting of the manager is completed, the settlement management apparatus 100 updates the virtual money collection container (S216). Here, examples of the process related to update of the virtual money collection container in step S216 include a process of associating the identification information corresponding to the set manager with the virtual money collection container. The process of step S216 is not limited to the foregoing process. For example, the settlement management apparatus 100 may further associate information indicating a contact address or information indicating a password with the virtual money collection container.

When the process of step S216 is performed, for example, the settlement management apparatus 100 transmits location information indicating the location of the generated virtual money collection container, as in step S110 of FIG. 2 (S218).

The settlement management apparatus 100 performs cancellation of the manager set in the virtual money collection container and resetting of the manager, for example, by performing the process illustrated in FIG. 4. Needless to say, the change process of changing the manager set in the virtual money collection container according to the embodiment is not limited to the example illustrated in FIG. 4.

### [3] Specific example of process in settlement management system according to embodiment

Next, an example of a process in the settlement management system according to the embodiment which is realized by performing the process related to the settlement management method according to the embodiment described above in the settlement management apparatus 100 will be described.

Hereinafter, an example of the process in the settlement management system according to the embodiment will be described mainly exemplifying a case in which the manager according to the embodiment is the manager apparatus and a settlement management system according to the embodiment is the settlement management system 1000 illustrated in FIG. 1.

Hereinafter, an example of a process in the settlement management system 1000 will be described mainly exemplifying a case in which settlement in the settlement management system 1000 is performed via a POS apparatus installed in a store.

Hereinafter, an example of a process in the settlement management system 1000 will be described exemplifying a case in which the manager apparatuses set in the virtual money collection container 300 are two information processing apparatuses, i.e., the information processing apparatuses 200A and 200B illustrated in FIG. 1. Hereinafter, a case in which the settlement management apparatus 100 performs the authentication process in the first example as the process (the authentication process) of the foregoing (1) will be described.

### (I) First example of process in settlement management system 1000

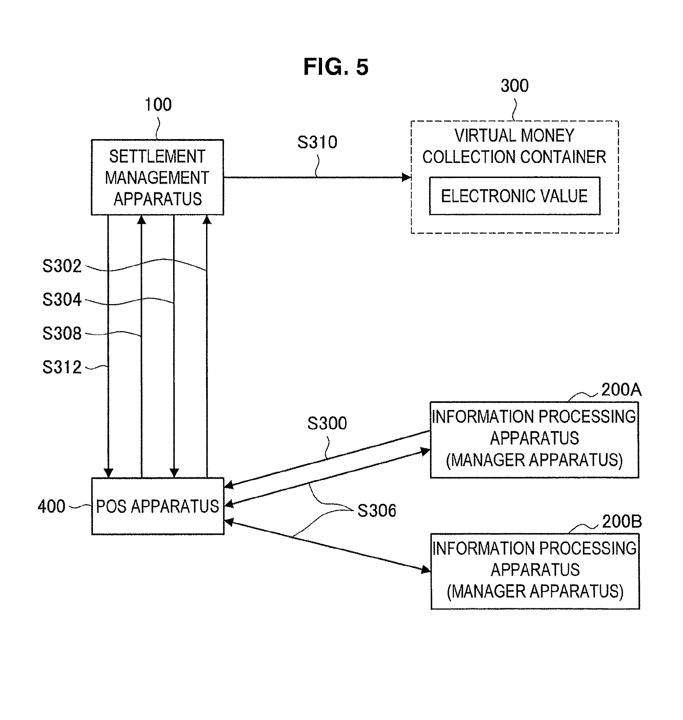

FIG. 5 is an explanatory diagram illustrating a first example of a process in the settlement management system 1000 according to the embodiment. Here, in FIG. 5, the settlement management apparatus 100, the information processing apparatuses 200A and 200B serving as the manager apparatuses, and a POS apparatus 400 are illustrated. In FIG. 5, an example in which the virtual money collection container 300 is recorded on a recording medium separate from the settlement management apparatus 100 is illustrated.

When settlement starts in a store in which the POS apparatus 400 is set, the information processing apparatus 200A transmits location information indicating the location of the virtual money collection container 300 to the POS apparatus 400 (S300). Here, communication between the POS apparatus 400 and the information processing apparatus 200 such as the information processing apparatus 200A may be, for example, any wireless communication such as contactless communication by NFC or may be any wired communication.

The POS apparatus 400 receiving the location information in step S300 transmits a settlement request to the settlement management apparatus 100 (S302). Here, the settlement request according to the embodiment includes information indicating a command to perform the process related to the settlement, information indicating a settlement amount, and location information. The settlement request according to the embodiment is not limited to the foregoing settlement request. For example, when the location information is transmitted as data separate from the settlement request, the location information may not be included in the settlement request according to the embodiment.

The settlement management apparatus 100 receiving the settlement request transmitted from the POS apparatus 400 in step S302 transmits, for example, an identification information transmission request (an example of a transmission request which is a request for transmitting information used for authentication in the authentication process) which is a request for transmitting the identification information to the POS apparatus 400 (S304).

The POS apparatus 400 receiving the identification information transmission request transmitted from the settlement management apparatus 100 in step S304 transmits the identification information transmission request to each of the information processing apparatuses 200A and 200B and acquires identification information in response to the identification information transmission request from the information processing apparatuses 200A and 200B (S306). Here, communication between the POS apparatus 400 and the information processing apparatuses 200A and 200B may be performed, for example, by encrypting a communication path through mutual authentication.

The POS apparatus 400 receiving the identification information transmitted from each of the information processing apparatuses 200A and 200B in step S306 transmits the identification information to the settlement management apparatus 100 (S308).

The settlement management apparatus 100 receiving the identification information transmitted from the POS apparatus 400 in step S308, that is, the identification information transmitted from the information processing apparatuses 200A and 200B, performs the process (the authentication process) of the foregoing (1) using, for example, the received identification information. Then, the settlement management apparatus 100 performs the process related to the settlement using the electronic value associated with the virtual money collection container 300 based on the result of the process (the authentication process) of the foregoing (1) (S310).

When the process of step S310 is completed, the settlement management apparatus 100 transmits information (data) indicating the result of the process related to the settlement to the POS apparatus 400 (S312).

In the settlement management system 1000, the settlement using the electronic value associated with the virtual money collection container 300 is realized, for example, by performing the process illustrated in FIG. 5.

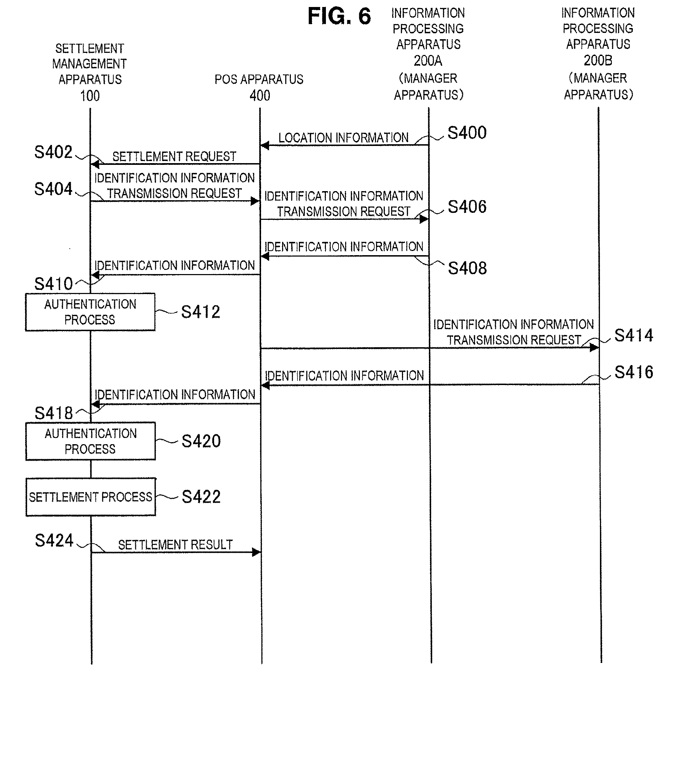

FIG. 6 is an explanatory diagram illustrating the process in the first example in the settlement management system 1000 illustrated in FIG. 5 more specifically.

When the settlement starts in the store in which the POS apparatus 400 is set, the information processing apparatus 200A transmits location information indicating the location of the virtual money collection container 300 to the POS apparatus 400, as in step S300 of FIG. 5 (S400).

The POS apparatus 400 receiving the location information in step S400 transmits a settlement request to the settlement management apparatus 100 (S402).

The settlement management apparatus 100 receiving the settlement request transmitted from the POS apparatus 400 in step S402 transmits, for example, an identification information transmission request (an example of a transmission request which is a request for transmitting information used for authentication in the authentication process) which is a request for transmitting the identification information to the POS apparatus 400 (S404).

The POS apparatus 400 receiving the identification information transmission request transmitted from the settlement management apparatus 100 in step S404 transmits the identification information transmission request to the information processing apparatus 200A (S406).

The information processing apparatus 200A receiving the identification information transmission request transmitted from the POS apparatus 400 in step S406 transmits the identification information to the POS apparatus 400 based on the identification information transmission request (S408). Here, the information processing apparatus 200A processes the identification information transmission request and automatically transmits the identification information, but the process of step S408 is not limited to the foregoing process. For example, the information processing apparatus 200A may transmit the identification information based on a user operation indicating permission to transmit the identification information. The user operation indicating the permission to transmit the identification information corresponds to, for example, a user operation indicating that the user of the manager apparatus approves the settlement.

The POS apparatus 400 receiving the identification information transmitted from the information processing apparatus 200A in step S408 transmits the identification information to the settlement management apparatus 100 (S410).

The settlement management apparatus 100 receiving the identification information corresponding to the information processing apparatus 200A and transmitted from the POS apparatus 400 in step S410 performs the authentication process using the identification information (S412).

The POS apparatus 400 receiving the identification information transmission request transmitted from the settlement management apparatus 100 in step S404 transmits the identification information transmission request to the information processing apparatus 200B (S414).

The information processing apparatus 200B receiving the identification information transmission request transmitted from the POS apparatus 400 in step S414 transmits the identification information to the POS apparatus 400, for example, based on the identification information transmission request, as in step S408 (S416).

The POS apparatus 400 receiving the identification information transmitted from the information processing apparatus 200B in step S416 transmits the identification information to the settlement management apparatus 100 (S418).

The settlement management apparatus 100 receiving the identification information corresponding to the information processing apparatus 200B and transmitted from the POS apparatus 400 in step S418 performs the authentication process using the identification information (S420).

The settlement management apparatus 100 selectively performs the process related to the settlement using the electronic value associated with the virtual money collection container 300 based on the result of the authentication process in step S412 and the result of the authentication process in step S420 (S422: settlement process). Here, the settlement management apparatus 100 performs the process related to the settlement using the electronic value associated with the virtual money collection container 300 when the authentication of each of the information processing apparatuses 200A and 200B (the manager apparatuses) is completed through the authentication process in step S412 and the authentication process in step S420.

When the process of step S422 is performed, the settlement management apparatus 100 transmits information (data) indicating the result of the process related to the settlement to the POS apparatus 400 (S424).

In the settlement management system 1000, the settlement using the electronic value associated with the virtual money collection container 300 is realized, for example, by performing the process illustrated in FIG. 6.

The process in the settlement management system 1000 according to the first example is not limited to the processes illustrated in FIGS. 5 and 6.

For example, the settlement management apparatus 100 may perform the processes of steps S406 to S412 illustrated in FIG. 6 and the processes of steps S414 to S420 illustrated in FIG. 6 in parallel.

In FIGS. 5 and 6, the example in which the information processing apparatus transmitting the location information to the POS apparatus 400 is the information processing apparatus 200A serving as the manager apparatus has been illustrated, but the information processing apparatus transmitting the location information to the POS apparatus 400 may not be the information processing apparatus serving as the manager apparatus. Even when the information processing apparatus transmitting the location information to the POS apparatus 400 is not the information processing apparatus serving as the manager apparatus, the settlement management apparatus 100 can realize the settlement using the electronic value associated with the virtual money collection container 300 by performing the process related to the management method according to the embodiment.

### (II) Second example of process in settlement management system 1000

In the process in the settlement management system 1000 according to the first example, the example in which the settlement management apparatus 100 performs the process related to the settlement management method according to the embodiment using the identification information acquired via the POS apparatus 400 has been described. However, the processes in the settlement management system 1000 are not limited to the process related to the settlement management method according to the embodiment performed using the identification information acquired via the POS apparatus 400 by the settlement management apparatus 100. For example, the settlement management apparatus 100 can also perform the process related to the settlement management method according to the embodiment using the identification information acquired by communicating with the information processing apparatus 200 serving as the manager apparatus directly (or via a network)

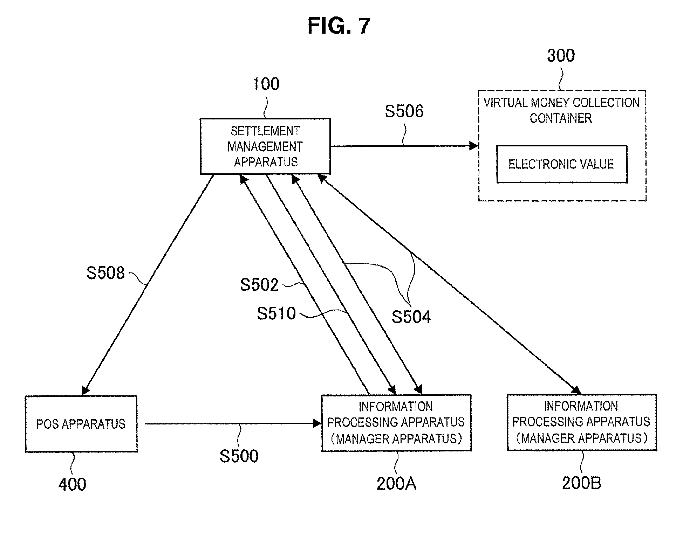

FIG. 7 is an explanatory diagram illustrating the process in the second example in the settlement management system 1000 according to the embodiment. Here, as in FIG. 5, the settlement management apparatus 100, the information processing apparatuses 200A and 200B serving as the manager apparatus, and the POS apparatus 400 are illustrated in FIG. 7. In FIG. 7, an example in which the virtual money collection container 300 is recorded on a recording medium separate from the settlement management apparatus 100 is illustrated as in FIG. 5.

When settlement starts in a store in which the POS apparatus 400 is set, for example, the POS apparatus 400 transmits information indicating a settlement amount to the information processing apparatus 200A (S500).

The information processing apparatus 200A receiving the information indicating the settlement amount transmitted from the POS apparatus 400 in step S500 transmits a settlement request to the settlement management apparatus 100 (S502).

The settlement management apparatus 100 receiving the settlement request transmitted from the information processing apparatus 200A in step S502 transmits, for example, an identification information transmission request (an example of a transmission request which is a request for transmitting information used for authentication in the authentication process) to each of the information processing apparatuses 200A and 200B set as the manager apparatuses of the virtual money collection container 300. Then, the settlement management apparatus 100 acquires the identification information in response to the identification information transmission request from the information processing apparatuses 200A and 200B (S504).

For example, the settlement management apparatus 100 receiving the identification information transmitted from the information processing apparatuses 200A and 200B in step S504 performs the process (the authentication process) of the foregoing (1) using the received identification information, as in step S310 of FIG. 5. Then, for example, the settlement management apparatus 100 performs the process related to the settlement using the electronic value associated with the virtual money collection container 300 based on the result of the process (the authentication process) of the foregoing (1), as in step S310 of FIG. 5 (S506).

When the process of step S506 is completed, the settlement management apparatus 100 transmits information indicating the result of the process related to the settlement to the POS apparatus 400 (S508). When the process of step S506 is completed, the settlement management apparatus 100 transmits the information indicating the result of the process related to the settlement to the information processing apparatus 200A having transmitted the settlement request (S510).

For example, even when the process illustrated in FIG. 7 is performed, the settlement using the electronic value associated with the virtual money collection container 300 is realized in the settlement management system 1000, as in the process in the settlement management system 1000 according to the first example. Needless to say, the process in the settlement management system 1000 according to the second example is not limited to the process illustrated in FIG. 7.

### (III) Third example of process in settlement management system 1000

In the process in the settlement management system 1000 according to the first example, the example in which the process related to the settlement management method according to the embodiment is performed using the identification information acquired via the POS apparatus 400 has been described. In the process in the settlement management system 1000 according to the second example, the example in which the settlement management apparatus 100 performs the process related to the settlement management method according to the embodiment using the identification information acquired by performing communication with the information processing apparatus 200 serving as the manager apparatus directly (or via a network) has been described. However, the process in the settlement management system 1000 is not limited to the process in the settlement management system 1000 according to the first example and the process in the settlement management system 1000 according to the second example.

For example, in the settlement management system 1000, a process combining the process in the settlement management system 1000 according to the first example and the process in the settlement management system 1000 according to the second example may be performed. That is, for example, the settlement management apparatus 100 can also perform the process related to the settlement management method according to the embodiment using the identification information acquired via the POS apparatus 400 and the identification information acquired by communicating with the information processing apparatus 200 serving as the manager apparatus directly (or via a network).

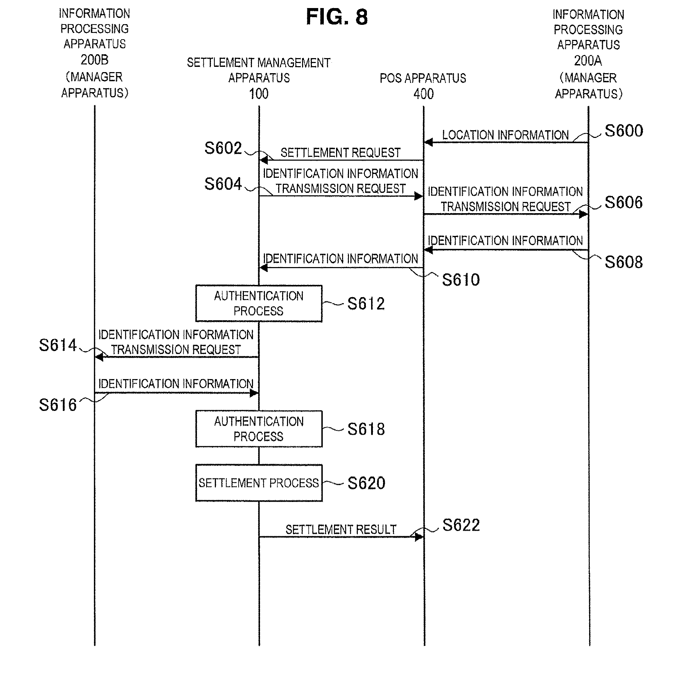

FIG. 8 is an explanatory diagram illustrating the process in the third example in the settlement management system 1000 according to the embodiment. Here, as in FIG. 6, the settlement management apparatus 100, the information processing apparatuses 200A and 200B serving as the manager apparatus, and the POS apparatus 400 are illustrated in FIG. 8.

When settlement starts in a store in which the POS apparatus 400 is set, the information processing apparatus 200A transmits location information indicating the location of the virtual money collection container 300 to the POS apparatus 400, as in step S300 of FIG. 5 (S600).

The POS apparatus 400 receiving the location information in step S600 transmits a settlement request to the settlement management apparatus 100 (S602).

The settlement management apparatus 100 receiving the settlement request transmitted from the POS apparatus 400 in step S602 transmits, for example, an identification information transmission request (an example of a transmission request which is a request for transmitting information used for authentication in the authentication process) to the POS apparatus 400 (S604).

The POS apparatus 400 receiving the identification information transmission request transmitted from the settlement management apparatus 100 in step S604 transmits the identification information transmission request to the information processing apparatus 200A (S606).

The information processing apparatus 200A receiving the identification information transmission request transmitted from the POS apparatus 400 in step S606 transmits the identification information to the POS apparatus 400, for example, based on the identification information transmission request, as in step S408 illustrated in FIG. 6 (S608).

The POS apparatus 400 receiving the identification information transmitted from the information processing apparatus 200A in step S608 transmits the identification information to the settlement management apparatus 100 (S610).

The settlement management apparatus 100 receiving the identification information corresponding to the information processing apparatus 200A and transmitted from the POS apparatus 400 in step S610 performs the authentication process using the identification information (S612).

The settlement management apparatus 100 receiving the settlement request transmitted from the POS apparatus 400 in step S602 transmits an identification information transmission request (an example of a transmission request which is a request for transmitting information used for authentication in the authentication process) to the information processing apparatus 200B (S614). Here, for example, the settlement management apparatus 100 transmits the identification information transmission request to the information processing apparatus 200B with reference to information (for example, an email address of the user of the information processing apparatus 200B) indicating a contact address of the information processing apparatus 200B associated with the virtual money collection container 300.

The information processing apparatus 200B receiving the identification information transmission request transmitted from the settlement management apparatus 100 in step S614 transmits the identification information to the settlement management apparatus 100, for example, based on the identification information transmission request, as in step S408 illustrated in FIG. 6 (S616).

The settlement management apparatus 100 receiving the identification information corresponding to the information processing apparatus 200B and transmitted from the information processing apparatus 200B in step S616 performs the authentication process using the identification information (S618).

As in step S422 of FIG. 6, the settlement management apparatus 100 selectively performs the process related to the settlement using the electronic value associated with the virtual money collection container 300 based on the result of the authentication process of step S612 and the result of the authentication process of step S618 (S620: settlement process).

When the process of step S620 is performed, the settlement management apparatus 100 transmits information (data) indicating the result of the process related to the settlement to the POS apparatus 400 (S622).

In the settlement management system 1000, the settlement using the electronic value associated with the virtual money collection container 300 is realized, for example, by performing the process illustrated in FIG. 8.

The process in the settlement management system 1000 according to the third example is not limited to the process illustrated in FIG. 8.

For example, the settlement management apparatus 100 may perform the processes of steps S604 to S612 illustrated in FIG. 8 and the processes of steps S614 to S618 illustrated in FIG. 8 in parallel.

In FIG. 8, the example in which the information processing apparatus transmitting the location information to the POS apparatus 400 is the information processing apparatus 200A serving as the manager apparatus has been illustrated, but the information processing apparatus transmitting the location information to the POS apparatus 400 may not be the information processing apparatus serving as the manager apparatus as in the process in the settlement management system 1000 according to the first example. Even when the information processing apparatus transmitting the location information to the POS apparatus 400 is not the information processing apparatus serving as the manager apparatus, the settlement management apparatus 100 can realize the settlement using the electronic value associated with the virtual money collection container 300 by performing the process related to the management method according to the embodiment.

### (IV) Fourth example of process in settlement management system 1000

In the process in the settlement management system 1000 according to the first example to the process in the settlement management system 1000 according to the third example, the examples in which the settlement management apparatus 100 performs the process related to the settlement management method according to the embodiment based on the identification information acquired after the start of the process related to the settlement have been described. However, the process in the settlement management system 1000 is not limited to the process related to the settlement management method according to the embodiment performed based on the identification information acquired after the start of the process related to the settlement by the settlement management apparatus 100. For example, in the settlement management system 1000, the settlement management apparatus 100 can also perform the process related to the settlement management method according to the embodiment based on the identification information transmitted in advance from the manager apparatus before the process related to the settlement starts.

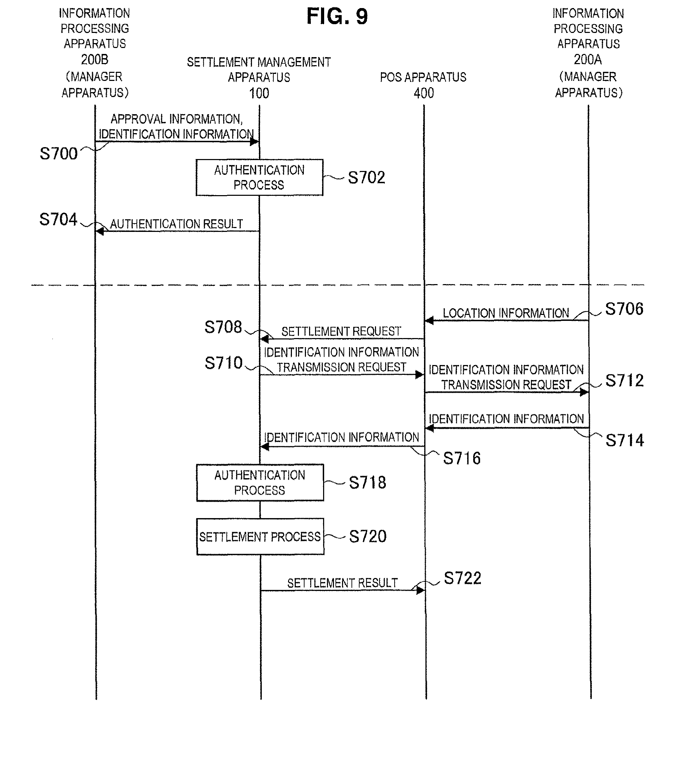

FIG. 9 is an explanatory diagram illustrating the process in the fourth example in the settlement management system 1000 according to the embodiment. Here, as in FIG. 6, the settlement management apparatus 100, the information processing apparatuses 200A and 200B serving as the manager apparatus, and the POS apparatus 400 are illustrated in FIG. 9. In FIG. 9, the processes of steps S700 to S704 are described as the processes before the process related to the settlement starts and the processes of steps S706 to S722 are described as the processes after the process related to the settlement starts.

The information processing apparatus 200B transmits approval information and identification information to the settlement management apparatus 100 (S700).

Here, the approval information according to the embodiment is, for example, information (data) including data indicating that the settlement is approved in advance. The approval information according to the embodiment may include, for example, information indicating a settlement approval condition such as information (for example, data indicating a time of day of settlement approval or a period of the settlement approval) indicating a time at which the settlement is approved or information (for example, data indicating a specific amount of money or data indicating the upper limit of an amount of money) indicating an amount of money by which the settlement is approved.

The settlement management apparatus 100 receiving the approval information and the identification information transmitted from the information processing apparatus 200A in step S700 performs the authentication process using the identification information corresponding to the information processing apparatus 200B (S702). Then, the settlement management apparatus 100 transmits data indicating the result of the authentication process to the information processing apparatus 200B (S704).

When settlement starts in a store in which the POS apparatus 400 is set, the information processing apparatus 200A transmits location information indicating the location of the virtual money collection container 300 to the POS apparatus 400, as in step S300 of FIG. 5 (S706).

The POS apparatus 400 receiving the location information in step S706 transmits a settlement request to the settlement management apparatus 100 (S708).

The settlement management apparatus 100 receiving the settlement request transmitted from the POS apparatus 400 in step S708 transmits, for example, an identification information transmission request (an example of a transmission request which is a request for transmitting information used for authentication in the authentication process) to the POS apparatus 400 (S710).

The POS apparatus 400 receiving the identification information transmission request transmitted from the settlement management apparatus 100 in step S710 transmits the identification information transmission request to the information processing apparatus 200A (S712).

The information processing apparatus 200A receiving the identification information transmission request transmitted from the POS apparatus 400 in step S712 transmits the identification information to the POS apparatus 400, for example, based on the identification information transmission request, as in step S408 illustrated in FIG. 6 (S714).

The POS apparatus 400 receiving the identification information transmitted from the information processing apparatus 200A in step S714 transmits the identification information to the settlement management apparatus 100 (S716).

The settlement management apparatus 100 receiving the identification information corresponding to the information processing apparatus 200A and transmitted from the POS apparatus 400 in step S716 performs the authentication process using the identification information (S718).

The settlement management apparatus 100 selectively performs the process related to the settlement using the electronic value associated with the virtual money collection container 300 based on the result of the authentication process in step S702 and the result of the authentication process in step S718, as in step S422 of FIG. 6 (S720: settlement process).

The settlement management apparatus 100 may selectively perform the process related to the settlement using the electronic value associated with the virtual money collection container 300, for example, further using the approval information acquired in step S700.

More specifically, for example, when the approval information includes information indicating a settlement approval condition, the settlement management apparatus 100 determines whether content of the process related to the settlement satisfies a condition (a temporal condition or a money condition) shown by the information indicating the settlement approval condition. When the condition shown by the information indicating the settlement approval condition is satisfied, the settlement management apparatus 100 selectively performs the process related to the settlement using the electronic value associated with the virtual money collection container 300. Conversely, when the condition shown by the information indicating the settlement approval condition is not satisfied, the settlement management apparatus 100 does not perform the process related to the settlement using the electronic value associated with the virtual money collection container 300.

When the process of step S720 is performed, the settlement management apparatus 100 transmits information (data) indicating the result of the process related to the settlement to the POS apparatus 400 (S722).

In the settlement management system 1000, the settlement using the electronic value associated with the virtual money collection container 300 is realized, for example, by performing the process illustrated in FIG. 9.

The process in the settlement management system 1000 according to the fourth example is not limited to the processes illustrated in FIG. 9. For example, in FIG. 9, the example in which the information processing apparatus transmitting the location information to the POS apparatus 400 is the information processing apparatus 200A serving as the manager apparatus has been described. However, as in the process in the settlement management system 1000 according to the first example, the information processing apparatus transmitting the location information to the POS apparatus 400 may not be the information processing apparatus serving as the manager apparatus. Even when the information processing apparatus transmitting the location information to the POS apparatus 400 is not the information processing apparatus serving as the manager apparatus, the settlement management apparatus 100 can realize the settlement using the electronic value associated with the virtual money collection container 300 by performing the process related to the management method according to the embodiment.

The case in which the manager according to the embodiment is the manager apparatus and the settlement management system according to the embodiment is the settlement management system 1000 illustrated in FIG. 1 has been exemplified above. Further, the example in which the settlement in the settlement management system 1000 is performed via the POS apparatus installed in the store has been described. However, the process in the settlement management system according to the embodiment is not limited to the above-described example. For example, the settlement management system according to the embodiment which includes the settlement management apparatus according to the embodiment can also be applied to web settlement in cooperation with social media (SM).

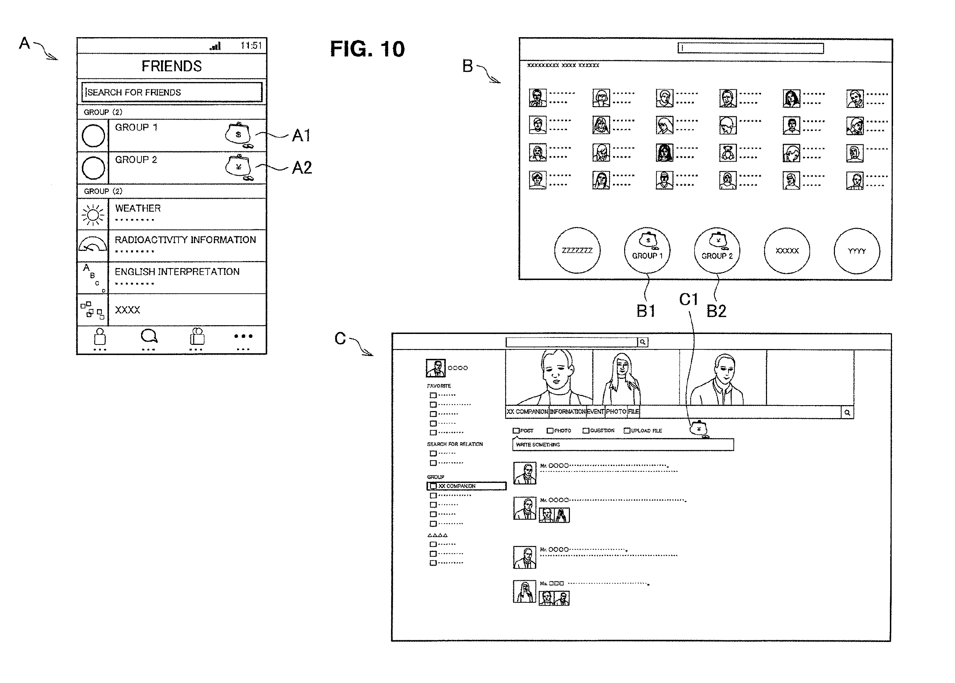

FIG. 10 is an explanatory diagram illustrating another example of the process in the settlement management system according to the embodiment. Here, FIG. 10 illustrates an example of a screen associated with SM when the settlement management system according to the embodiment performs web settlement in cooperation with the SM. A and B illustrated in FIG. 10 show examples of group list screens in the SM and C illustrated in FIG. 10 shows an example of an individual group screen in the SM.

As shown in A1, A2, B1, B2, and C1 of FIG. 10, icons indicating the virtual money collection containers according to the embodiment are displayed on screens regarding the SM. For example, when the icons illustrated in FIG. 10 is selected through a click operation or the like, the screens shown in A of FIG. 10 to C of FIG. 10 transition to, for example, screens on which users set as managers having a balance or payment authority can confirm information regarding the virtual money collection containers according to the embodiment.

For example, as illustrated in FIG. 10, when icons indicating the virtual money collection containers according to the embodiment are displayed on screens regarding the SM, the users can perform, for example, remittance to the virtual money collection containers according to the embodiment or web settlement using the electronic values associated with the virtual money collection containers according to the embodiment on the SM.

The screens regarding the SM on which the icons indicating the virtual money collection containers according to the embodiment are displayed are not limited to the group list screens in the SM shown in A and B of FIG. 10 and the individual group screen in the SM shown in C of FIG. 10. For example, when the virtual money collection container according to the embodiment is a personal account of the user, an icon indicating the virtual money collection container according to the embodiment may be displayed on a user information display screen in the SM.

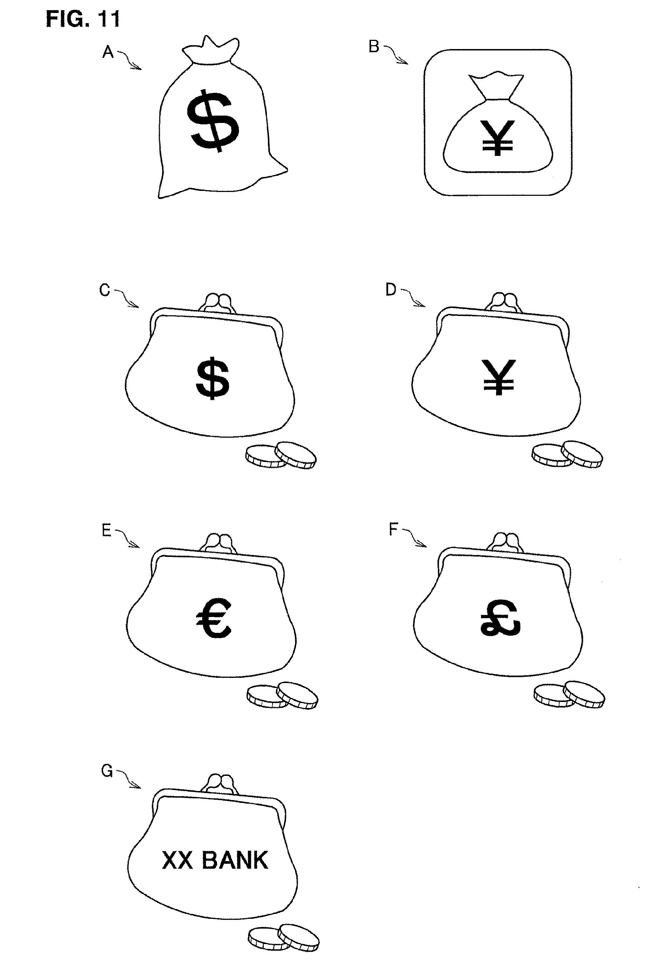

The icons indicating the virtual money collection containers according to the embodiment are not limited to the examples illustrated in FIG. 10. FIG. 11 is an explanatory diagram illustrating examples of icons indicating the virtual money collection containers according to the embodiment.

Examples of the icons indicating the virtual money collection containers according to the embodiment include icons indicating bags in which money is put, as shown in A and B of FIG. 11, icons indicating purses in which money is put, as shown in C to F of FIG. 11, and an icon indicating a name (for example, a bank name or a service name) indicating a kind of service regarding an electronic value, as shown in G of FIG. 11.

The icons indicating the virtual money collection containers according to the embodiment are not limited to the examples illustrated in FIG. 11. Examples of the icons indicating the virtual money collection containers according to the embodiment include icons capable of recalling money, such as icons indicating marks representing the kind of services regarding the electronic value.

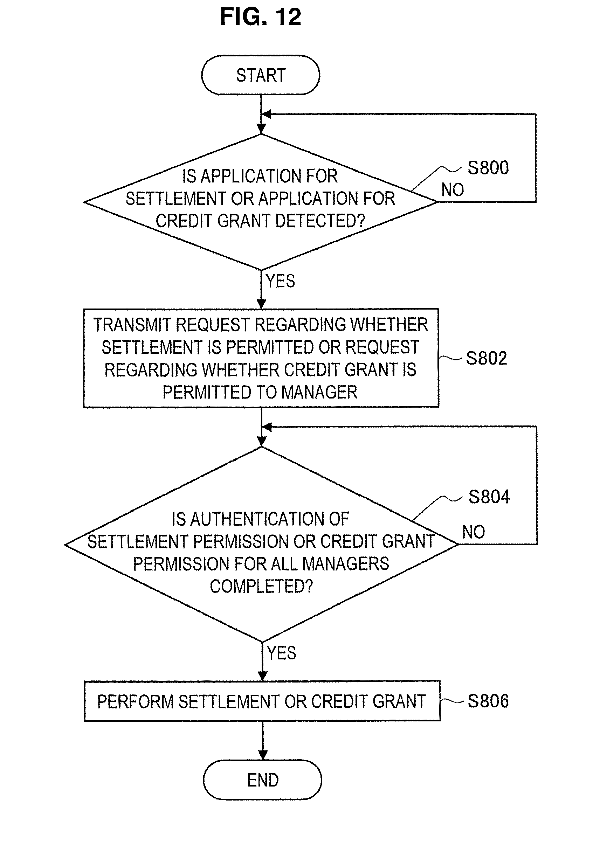

FIG. 12 is an explanatory diagram illustrating another example of the process in the settlement management system according to the embodiment. Here, in FIG. 12, an example of the process in the settlement management apparatus according to the embodiment when the settlement management system according to the embodiment performs web settlement coordinated with the SM is illustrated.

The settlement management apparatus according to the embodiment determines whether a settlement application or a credit grant application is detected (S800). When it is determined in step S800 that the settlement application or the credit grant application is not detected, the settlement management apparatus according to the embodiment does not proceed with the process until the settlement application or the credit grant application is detected.

When it is determined in step S800 that the settlement application or the credit grant application is detected, the settlement management apparatus according to the embodiment transmits a settlement permission request which is a request for a reply regarding whether the settlement is permitted or a credit grant permission request which is a request for a reply regarding whether the credit grant is permitted to the manager (S802). Here, for example, the settlement management apparatus according to the embodiment transmits the settlement permission request or the credit grant permission request to a contact address of the manager registered in advance. For example, the settlement management apparatus according to the embodiment transmits the settlement permission request or the credit grant permission request using a short message service (SMS) to a telephone number (which is an example of the contact address) of the manager registered in advance. For example, the settlement management apparatus according to the embodiment may transmit the settlement permission request or the credit grant permission request to an email address (which is an example of the contact address) of the manager registered in advance using an electronic mail.

In the settlement permission request according to the embodiment, for example, a reply time limit may be set. In the credit grant permission request according to the embodiment, for example, a time limit in which a credit is granted or a user who can exercise the credit after the credit is obtained may be set.

When the user making the settlement application or the credit grant application has an authority of the manager, for example, the settlement management apparatus according to the embodiment may transmits the settlement permission request or the credit grant permission request to another manager excluding the user.

When the process of step S802 is performed, the settlement management apparatus according to the embodiment determines whether authentication of the settlement permission or the credit grant permission for all the managers is completed (S804).

Here, when the manager performs the settlement permission or the credit grant permission, for example, the information processing apparatus (or the manager apparatus) owned by the manager is connected to a predetermined web site using link information (for example, a URL) contained in a message of the SMS or an electronic mail. Then, for example, the settlement management apparatus according to the embodiment authenticates each of the managers using the acquired identification information when the user serving as the manager performs an operation of inputting a PIN code or an operation (an operation of moving a reader or writer and the information processing apparatus at a communicable distance) of holding the information processing apparatus which can communicate with the reader or writer related to the NFC in conformity to NFC. Needless to say, the process of step S804 is not limited to the foregoing example.

When it is determined in step S804 that the authentication of the settlement permission or the credit grant permission for all the managers is not completed, for example, the settlement management apparatus according to the embodiment does not proceed with the process until it is determined that the authentication of the settlement permission or the credit grant permission for all the managers is completed.

For example, when the manager not performing the settlement permission or the credit grant permission is present or the authentication is not completed within the set time limit, for example, the settlement management apparatus according to the embodiment may notify the user making the settlement application or the credit grant application or the user and the manager that the application is rejected.

For example, when the manager for which the identification information is not acquired is present despite elapse of a set predetermined time, for example, the settlement management apparatus according to the embodiment may transmit the settlement permission request or the credit grant permission request to the manager again. When the settlement management apparatus transmits the settlement permission request or the credit grant permission request again, for example, the settlement management apparatus according to the embodiment may add information (for example, information indicating how much the manager completes the permission or which manager completes the permission) indicating a permission situation at the time point of the retransmission.

When it is not determined in step S804 that the authentication of the settlement permission or the credit grant permission for all the managers is completed, the settlement management apparatus according to the embodiment performs the settlement or the credit grant (S806).

When the settlement management system according to the embodiment performs the web settlement coordinated with the SM, the settlement management apparatus according to the embodiment performs, for example, the process illustrated in FIG. 12.

The process of the settlement management apparatus according to the embodiment when the settlement management system according to the embodiment performs the web settlement coordinated with the SM is not limited to the process illustrated in FIG. 12.

For example, when the user not having the authority of the manager belonging to the same group of the SM is present in step S802 of FIG. 12, the settlement management apparatus according to the embodiment may notify the user not having the authority of the manager that the settlement application or the credit grant application is made. In the case of the notification, whether the user not having the authority of the manager is notified when the application is made to the group belong to the user can also be set.

For example, when the settlement or the credit grant is performed and the performed process is completed, the settlement management apparatus according to the embodiment may notify the user and the manager making the application or all of the users belonging to the group of the SM of the completion of the settlement or the credit grant. When the credit grant is performed, the settlement management apparatus according to the embodiment may transmit information necessary at the time of use of the credit to a contact address of the user who can use the granted credit. Examples of the information necessary at the time of the use of the credit according to the embodiment include a passcode, a 2-dimensional code, a 3-dimensional code, and data stored in a secure element of an NFC device.

In FIG. 12, the example in which the settlement application or the credit grant application is made has been described, but the application according to the embodiment is not limited to the foregoing application. For example, the application according to the embodiment may be an application to pay the electronic value from the virtual money collection container according to the embodiment to a specific user. Examples of the process when the application according to the embodiment is the payment application include the same process as the credit grant application.

For example, when the credit is granted through the process illustrated in FIG. 12, the granted credit is used, for example, as described in the following (A) and (B). It is needless to say that examples of the case in which the granted credit is used are not limited to the examples described in the following (A) and (B).

### (A) Case in which granted credit is used online

An electronic value corresponding to the credit is provided to a personal account of a user who can use the granted credit and the user can perform the settlement within a credit range as in general web settlement.

When the settlement using the credit range is performed, the amount of the electronic value to which the credit is granted and which is associated with the virtual money collection container according to the embodiment is subtracted.

When a credit period set in the granted credit passes, the credit range remaining in the personal account of the user who can use the granted credit is nullified.

### (B) Case in which granted credit is used offline

For example, when a settlement process is performed at a store using, for example, a 2-dimensional code or data stored in a secure element of an NFC device and transmitted to a user who can use the granted credit, the settlement management apparatus according to the embodiment confirms the credit range or the time limit based on the 2-dimensional code or the like. When the credit range or the time limit is confirmed normally, the settlement management apparatus according to the embodiment performs the settlement within the credit range.

When the settlement using the credit range is performed, the amount of electronic value to which the credit is granted and which is associated with the virtual money collection container according to the embodiment is subtracted.

For example, when an application to pay the electronic value is made, for example, a process related to settlement described in the following (C) or (D) is realized. Here, the application to pay the electronic value is effective for clearance of the electronic value associated with the virtual money collection container according to the embodiment, for example, at the time of granting of pocket money by the electronic value or withdrawal of the user belonging to the group of the SM. Needless to say, the process related to the settlement when the application to pay the electronic value is made is not limited to the examples described in the following (C) and (D).

### (C) Online case

For example, the electronic value is granted to a personal account of a user permitted to make payment from the virtual money collection container according to the embodiment. The user can perform the settlement using the granted electronic value as in general web settlement.

### (D) Offline case

For example, a settlement process is performed at a store using, for example, a 2-dimensional code or data stored in a secure element of an NFC device and transmitted to a user permitted to make payment from the virtual money collection container according to the embodiment.

### (Settlement management system according to embodiment)

Next, an example of the configuration of the settlement management apparatus 100 and an example of the configuration of the information processing apparatus 200 by which the above-described settlement management system according to the embodiment can be configured will be each described.

### [I] Settlement management apparatus 100

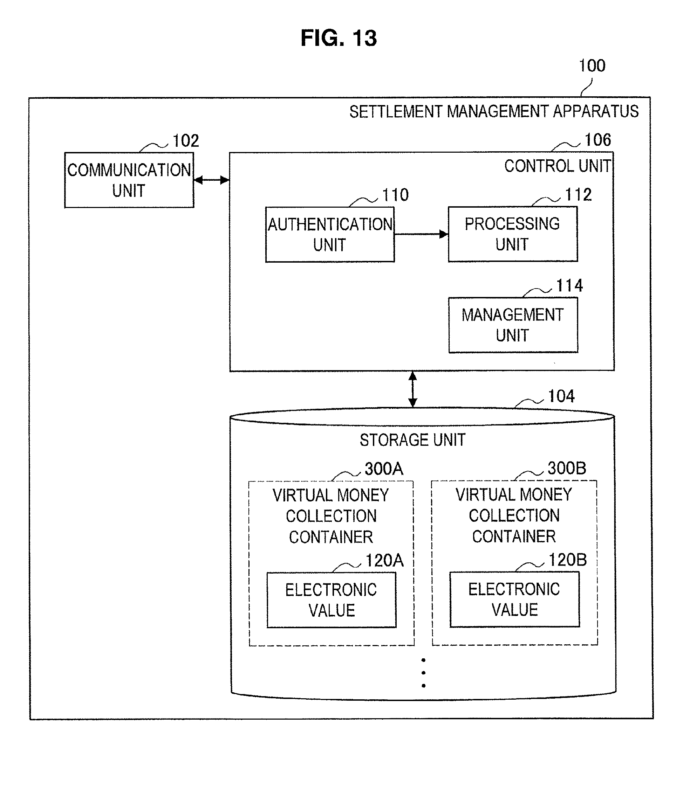

FIG. 13 is a block diagram illustrating an example of the configuration of the settlement management apparatus 100 according to the embodiment.

The settlement management apparatus 100 includes, for example, a communication unit 102, a storage unit 104, and a control unit 106.

The settlement management apparatus 100 may include, for example, a read-only memory (ROM) (not illustrated), a random access memory (RAM) (not illustrated), an operation unit (not illustrated) which can be operated by a user, and a display unit (not illustrated) which displays various screens on a display screen. In the settlement management apparatus 100, for example, the constituent elements are connected by a bus serving as a data transmission path.

Here, the ROM (not illustrated) stores programs to be used by the control unit 106 or control data such as arithmetic parameters. The RAM (not illustrated) temporarily stores programs or the like to be executed by the control unit 106.

An operation input device to be described below is exemplified as the operation unit (not illustrated) and a display device to be described below is exemplified as the display unit (not illustrated).

### [Example of hardware configuration of settlement management apparatus 100]

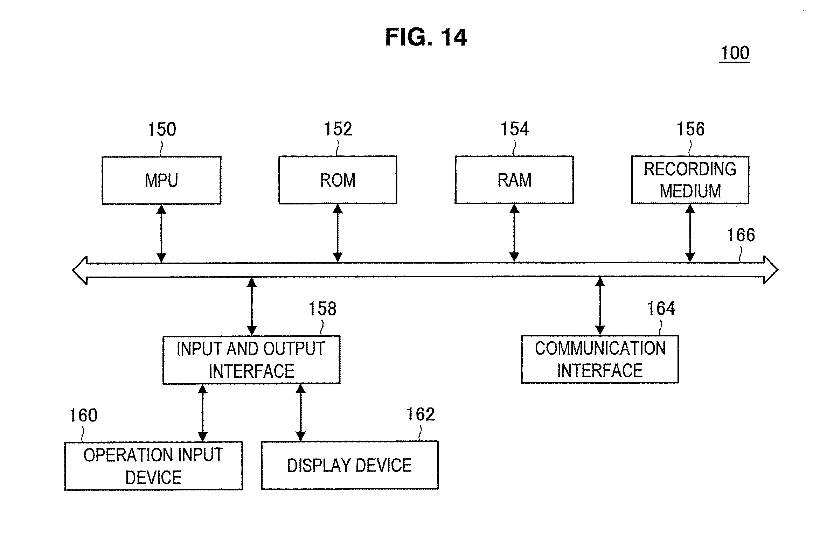

FIG. 14 is an explanatory diagram illustrating an example of a hardware configuration of the settlement management apparatus 100 according to the embodiment. The settlement management apparatus 100 includes, for example, an MPU 150, a ROM 152, a RAM 154, a recording medium 156, an input and output interface 158, an operation input device 160, a display device 162, and a communication interface 164. In the settlement management apparatus 100, for example, the constituent elements are connected by a bus 166 serving as a data transmission path.

The MPU 150 is configured to include, for example, a micro processing unit (MPU) or various processing circuits and functions as the control unit 106 that controls the entire settlement management apparatus 100. The MPU 150 serves as, for example, the authentication unit 110, the processing unit 112, and the management unit 114 to be described below in the settlement management apparatus 100.

The ROM 152 stores, for example, programs to be used by the MPU 150 or control data such as arithmetic parameters. For example, the RAM 154 temporarily stores programs or the like to be executed by the MPU 150.

The recording medium 156 functions as the storage unit 104 and stores, for example, various kinds of data such as the information used for the process (the authentication process) of the foregoing (1), such as the virtual money collection container according to the embodiment, the electronic value, the identification information, or the authentication information and an application. Here, as the recording medium 156, for example, a magnetic recording medium such as a hard disk or a non-volatile memory such as a flash memory can be exemplified. The recording medium 156 may be detachably mounted on the settlement management apparatus 100.

The input and output interface 158 connects, for example, the operation input device 160 or the display device 162. The operation input device 160 functions as an operation unit (not illustrated) and the display device 162 functions as a display unit (not illustrated). Here, examples of the input and output interface 158 include a Universal Serial Bus (USB) terminal, a Digital Visual Interface (DVI) terminal, a High-Definition Multimedia Interface (HDMI) (registered trademark) terminal, and various processing circuits. The operation input device 160 is provided on, for example, the settlement management apparatus 100 and is connected to the input and output interface 158 inside the settlement management apparatus 100. Examples of the operation input device 160 include a button, a direction key, a rotational selector such as a jog dial, and a combination thereof. The display device 162 is provided on, for example, the settlement management apparatus 100 and is connected to the input and output interface 158 inside the settlement management apparatus 100. Examples of the display device 162 include a liquid crystal display (LCD) and an organic LE display (which is called an organic electro-luminescence display or an organic light emitting diode (OLED) display).

The input and output interface 158 can, of course, be connected to an external device, such as an operation input device (for example, a keyboard or a mouse) serving as an external device or a display device of the settlement management apparatus 100. The display device 162 may be a device, such as a touch screen, on which display or a user's operation can be performed.

The communication interface 164 is communication means included in the settlement management apparatus 100 and functions as the communication unit 102 that performs wired and wireless communication with an external apparatus such as the information processing apparatus 200 or a server via a network (or directly). Here, examples of the communication interface 164 include a communication antenna and a Radio Frequency (RF) circuit (wireless communication), an IEEE 802.15.1 port and a transmission and reception circuit (wireless communication), an IEEE 802.11.b port and a transmission and reception circuit (wireless communication), and a LAN terminal and a transmission and reception circuit (wired communication). Examples of the network according to the embodiment include a wired network such as a Local Area Network (LAN) or a Wide Area Network (WAN), a wireless network such as a Wireless Local Area Network (WLAN) or a Wireless Wide Area Network (WWAN) via a base station, and the Internet using a communication protocol such as Transmission Control Protocol/Internet Protocol (TCP/IP).

The settlement management apparatus 100 performs the process related to the information processing method according to the embodiment with the configuration illustrated in FIG. 14, for example. The hardware configuration of the settlement management apparatus 100 according to the embodiment is not limited to the configuration illustrated in FIG. 14.

For example, when the settlement management apparatus 100 communicates with an external apparatus such as the information processing apparatus 200 via an external communication device connected via the input and output interface 158 or the like, the settlement management apparatus 100 may not include the communication interface 164.

For example, the settlement management apparatus 100 may have a configuration in which the operation device 160 or the display device 162 is not included.

Referring back to FIG. 13, an example of the configuration of the settlement management apparatus 100 will be described. The communication unit 102 is communication means included in the settlement management apparatus 100 and performs wired and wireless communication with an external apparatus such as the settlement management apparatus 100 and a server via a network (or directly). The communication of the communication unit 102 is controlled by, for example, the control unit 106.

Here, examples of the communication unit 102 include a communication antenna and an RF circuit, a LAN terminal and a transmission and reception circuit. However, the configuration of the communication unit 102 is not limited to the foregoing configuration. For example, the communication unit 102 may have a configuration corresponding to any standard by which communication can be performed by a USB terminal and a transmission and reception circuit or may have any configuration in which communication with an external apparatus can be performed via a network.

The storage unit 104 is storage means included in the settlement management apparatus 100 and stores, for example, various kinds of data such as the information used for the process (the authentication process) of the foregoing (1), such as the virtual money collection container according to the embodiment, the electronic value, the identification information, or the authentication information and an application. For example, the storage unit 104 may be provided with a region with a tamper-resistant property and the information used for the process (the authentication process) of the foregoing (1), such as the virtual money collection container according to the embodiment, the electronic value, the identification information, or the authentication information may be stored in the region with the tamper-resistant property. In FIG. 13, an example in which a virtual money collection container 300A, an electronic value 120A associated with the virtual money collection container 300A, a virtual money collection container 300B, an electronic value 120B associated with the virtual money collection container 300B, etc. are stored in the storage unit 104 is illustrated.

Here, examples of the storage unit 104 include a magnetic recording medium such as a hard disk or a non-volatile memory such as a flash memory. The storage unit 104 may be detachably mounted on the settlement management apparatus 100.

The control unit 106 is configured to include, for example, an MPU and serves to control the entire settlement management apparatus 100. The control unit 106 includes, for example, the authentication unit 110, the processing unit 112, and the management unit 114 and serves to chiefly perform the process related to the settlement management method according to the embodiment.

The authentication unit 110 serves to chiefly perform the process (the authentication process) of the foregoing (1) and authenticates each of the managers set in the virtual money collection containers 300A, 300B, etc. More specifically, the settlement management apparatus 100 authenticates the managers based on the identification information indicating the managers, for example, as described in the authentication process according to the first example to the authentication process according to the fourth example.

The processing unit 112 serves to chiefly perform the process (the settlement process) of the foregoing (2) and performs the process related to the settlement according to the embodiment when the authentication unit 110 completes the authentication of each manager. After the processing unit 112 performs the process related to the settlement, the processing unit 112 may further perform the process related to the virtual money collection container. As described above, the process related to the virtual money collection container according to the embodiment may be a process which is part of the process related to the settlement.

The management unit 114 serves to chiefly perform the process (the management process) of the foregoing (3) and manages the virtual money collection containers 300A, 300B, etc. More specifically, for example, the management unit 114 performs the management process according to the first example or the management process according to the second example.

The control unit 106 includes, for example, the authentication unit 110, the processing unit 112, and the management unit 114 and chiefly performs the process related to the settlement management method according to the embodiment.

The configuration of the control unit according to the embodiment included in the settlement management apparatus 100 is not limited to the configuration illustrated in FIG. 13.

For example, the control unit according to the embodiment may not include the management unit 114. Even in the configuration in which the management unit 114 is not included, the control unit according to the embodiment can chiefly perform the process (the authentication process) of the foregoing (1) and the process (the settlement process) of the foregoing (2). Accordingly, even when the control unit according to the embodiment included in the settlement management apparatus 100 is configured not to include the management unit 114, the settlement management system through which settlement of one bill can be allotted among and performed by the plurality of users is realized.

For example, in the configuration illustrated in FIG. 13, the settlement management apparatus 100 performs the process related to the settlement management method according to the embodiment. Accordingly, for example, the settlement management apparatus 100 has the configuration illustrated in FIG. 13 and thus it is realized that the settlement of one bill is allotted among and performed by the plurality of users.

As described above, the settlement management apparatus 100 performs, for example, the process (the authentication process) of the foregoing (1) and the process (the settlement process) of the foregoing (2) as the process related to the settlement management method according to the embodiment. Here, when, for example, the process (the authentication process) of the foregoing (1) and the process (the settlement process) of the foregoing (2) are performed as the process related to the settlement management method according to the embodiment and, for example, the users (or the information processing apparatuses serving as the manager apparatuses) serving as the managers are authenticated rather than all the users (or the information processing apparatus corresponding to all the users) among whom the settlement is allotted despite an increase in the number of users among whom the settlement is allotted, the settlement is performed.

Accordingly, even the settlement management apparatus 100 has, for example, the configuration illustrated in FIG. 13, a time necessary until completion of the settlement is prevented from being lengthened, for example, despite an increase in the number of users among whom the settlement is allotted. Accordingly, for example, the settlement management apparatus 100 has the configuration illustrated in FIG. 13, and thus convenience for the users is prevented from deteriorating.

The configuration of the settlement management apparatus 100 according to the embodiment is not limited to the configuration illustrated in FIG. 13.

For example, as described above, the settlement management apparatus 100 can also have the configuration in which the management unit 114 is not included. Even when the management unit 114 is not included, the settlement management apparatus 100 can chiefly perform the process (the authentication process) of the foregoing (1) and the process (the settlement process) of the foregoing (2). Accordingly, even when the settlement management apparatus 100 has the configuration in which the management unit 114 is not included, the settlement management system through which settlement of one bill can be allotted among and performed by the plurality of users is realized.

The settlement management apparatus 100 can also include one or two or more of the authentication unit 110, the processing unit 112, and the management unit 114 illustrated in FIG. 13 separately from the control unit 106 (for example, which are realized by separate processing circuits).

For example, when the settlement management apparatus 100 performs communication with the information processing apparatus 200 or an external apparatus such as a server via an external communication device, the settlement management apparatus 100 may not include the communication unit 102.

The settlement management apparatus 100 can also have a configuration in which the storage unit 104 storing the virtual money collection container according to the embodiment or the information used for the process (the authentication process) of the foregoing (1), such as the identification information or the authentication information, is not included. Even in the configuration in which the storage unit 104 storing the virtual money collection container according to the embodiment or the like is not included, the settlement management apparatus 100 can perform the process related to the settlement management method according to the embodiment using the virtual money collection container according to the embodiment or the like stored in, for example, an external recording medium or a recording medium included in an external apparatus which can communicate via a network (or directly).

### [II] Information processing apparatus 200

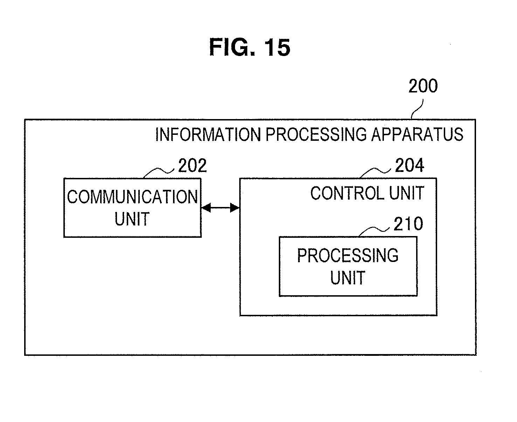

FIG. 15 is a block diagram illustrating an example of the configuration of the information processing apparatus 200 according to the embodiment.

The information processing apparatus 200 includes, for example, a communication unit 202 and a control unit 204.

The information processing apparatus 200 may include, for example, a ROM (not illustrated), a RAM (not illustrated), a storage unit (not illustrated), an operation unit (not illustrated) which can be operated by a user, and a display unit (not illustrated) which displays various screens on a display screen. In the information processing apparatus 200, for example, the constituent elements are connected by a bus serving as a data transmission path.

Here, the ROM (not illustrated) stores programs to be used by the control unit 204 or control data such as arithmetic parameters. The RAM (not illustrated) temporarily stores programs or the like to be executed by the control unit 204.

The storage unit (not illustrated) is storage means included in the information processing apparatus 200 and stores, for example, various kinds of data such as the information used in the process (the authentication process) of the foregoing (1) by the settlement management apparatus 100 according to the embodiment, such as the identification information or the authentication information, and various applications such as an application capable of managing the plurality of virtual money collection containers illustrated in FIG. 3. For example, the storage unit (not illustrated) may be provided with a region with a tamper-resistant property and, for example, the identification information or the authentication information may be stored in the region with the tamper-resistant property.

Here, examples of the storage unit (not illustrated) include a magnetic recording medium such as a hard disk and a non-volatile memory such as a flash memory. The storage unit (not illustrated) may be detachably mounted on the information processing apparatus 200.

The operation input device illustrated in FIG. 14 described above is exemplified as the operation unit (not illustrated) and the display device illustrated in FIG. 14 described above is exemplified as the display unit (not illustrated).

### [Example of hardware configuration of information processing apparatus 200]

The information processing apparatus 200 has, for example, a hardware configuration illustrated in FIG. 14. For example, in the configuration illustrated in FIG. 14, the information processing apparatus 200 performs, for example, a process of causing an external apparatus such as the settlement management apparatus 100 to generate the virtual money collection container according to the embodiment or each process, such as transmission of the identification information, in the process in the above-described settlement management system 1000.

The hardware configuration of the information processing apparatus 200 according to the embodiment is not limited to the configuration illustrated in FIG. 14.

For example, when the information processing apparatus 200 communicates with an external apparatus such as the settlement management apparatus 100 via an external communication device connected via the input and output interface 158 or the like, the information processing apparatus 200 may not include the communication interface 164.

The information processing apparatus 200 may include, for example, a plurality of communication interfaces with different communication schemes, such as communication circuits related to a communication antenna, an RF circuit, and NFC.

For example, the information processing apparatus 200 may have a configuration in which the operation device 160 or the display device 162 is not included.

Referring back to FIG. 15, an example of the configuration of the information processing apparatus 200 will be described. The communication unit 202 is communication means included in the information processing apparatus 200 and perform wired and wireless communication with an external apparatus such as the settlement management apparatus 100 via a network (or directly). The communication of the communication unit 202 is controlled by, for example, the control unit 204.

Here, examples of the communication unit 202 include a communication antenna and an RF circuit, a LAN terminal and a transmission and reception circuit. However, the configuration of the communication unit 202 is not limited to the foregoing configuration. For example, the communication unit 202 may have a configuration corresponding to any standard by which communication can be performed by a USB terminal and a transmission and reception circuit or may have any configuration in which communication with an external apparatus can be performed via a network.

The control unit 204 is configured to include, for example, an MPU and serves to control the entire information processing apparatus 200. The control unit 204 includes, for example, a processing unit 210 and serves to chiefly perform, for example, the process of causing an external apparatus such as the settlement management apparatus 100 to generate the virtual money collection container according to the embodiment or each process, such as transmission of the identification information, in the process in the above-described settlement management system 1000.

The processing unit 210 chiefly performs, for example, the process of causing an external apparatus such as the settlement management apparatus 100 to generate the virtual money collection container according to the embodiment or each process, such as transmission of the identification information, in the process in the above-described settlement management system 1000. Here, examples of the process of causing an external apparatus to generate the virtual money collection container according to the embodiment include a process of transmitting the above-described generation request (a request for generating the virtual money collection container) according to the embodiment to an external apparatus such as the settlement management apparatus 100.

The process in the processing unit 210 is not limited to the foregoing process. For example, the processing unit 210 may perform a process of transmitting the above-described change request (a request for changing the manager set in the virtual money collection container) according to the embodiment to an external apparatus such as the settlement management apparatus 100.

The control unit 204 includes, for example, the processing unit 210 and chiefly performs, for example, the process of causing an external apparatus to generate the virtual money collection container according to the embodiment or each process, such as transmission of the identification information, in the process in the above-described settlement management system 1000.

For example, in the configuration illustrated in FIG. 15, the information processing apparatus 200 performs the process of causing an external apparatus to generate the virtual money collection container according to the embodiment or each process, such as transmission of the identification information, in the process in the above-described settlement management system 1000.

Accordingly, the information processing apparatus 200 has, for example, the configuration illustrated in FIG. 15 and can cause, for example, the settlement management apparatus 100 to generate the virtual money collection container according to the embodiment.

The information processing apparatus 200 has, for example, the configuration illustrated in FIG. 15 and thus, for example, the process in the settlement management system 1000 according to the first example to the process in the settlement management system 1000 according to the fourth example are realized.

Accordingly, the information processing apparatus 200 has, for example, the configuration illustrated in FIG. 15, and thus the settlement management system through which settlement of one bill can be allotted among and performed by the plurality of users can be realized.

The configuration of the information processing apparatus 200 according to the embodiment is not limited to the configuration illustrated in FIG. 15.

For example, the information processing apparatus 200 according to the embodiment can include the processing unit 210 illustrated in FIG. 15 individually from the control unit 204 (for example, the processing unit is realized by an individual processing circuit).

For example, when the information processing apparatus 200 according to the embodiment communicates with an external apparatus such as the settlement management apparatus 100 via an external communication device, the information processing apparatus 200 according to the embodiment may not include the communication unit 202.

The settlement management apparatus has been exemplified above as an element included in the settlement management system according to the embodiment, but the embodiment is not limited to this form. The embodiment can be applied to various apparatuses, for example, computers such as personal computers (PCs) or servers. The embodiment can also be applied to, for example, processing integrated circuits (ICs) which can be embedded in the foregoing apparatuses.

The information processing apparatus has been exemplified as an element included in the settlement management system according to the embodiment, but the embodiment is not limited to this form. The embodiment can be applied to, for example, various apparatuses such as a computer such as a PC, a tablet apparatus, a communication apparatus such as a mobile phone or a smartphone, a video and music reproduction apparatus (or s video and music recording and reproducing apparatus), and a game apparatus. The embodiment can also be applied to, for example, processing ICs which can be embedded in to the foregoing apparatuses.

The process related to the settlement management method according to the embodiment may be realized by, for example, a system formed by a plurality of apparatuses on the assumption of connection to a network (or communication between apparatuses) such as cloud computing.

In the settlement management system according to the embodiment, it is realized that the settlement of one bill is allotted among and performed by the plurality of users when the settlement management apparatus according to the embodiment performs the process related to the settlement management method according to the embodiment. By using the settlement management system according to the embodiment, for example, the advantages described in the following (a) to (c) are obtained.

(a) When the virtual money collection container according to the embodiment is retained at the time of the completion of the process related to the settlement, the electronic value (an electronic value corresponding to a so-called change) corresponding to a balance after the settlement is managed in the virtual money collection container. Accordingly, in the foregoing case, since an allotted amount of each of the users among whom the settlement of one bill is allotted can be approximately set, an improvement of versatility of the settlement can be achieved.
(b) By setting the plurality of managers in the virtual money collection container according to the embodiment, it is possible to ensure security of the settlement using the electronic value associated with the virtual money collection container.
(c) By limiting the number of managers set in the virtual money collection container according to the embodiment, it is possible to shorten a settlement time despite an increase in the number of users among whom the settlement of one bill is allotted.

### (Program according to embodiment)

By allowing a computer to execute a program (for example, a program capable of executing the process related to the settlement management method according to the embodiment, such as the process (the authentication process) of the foregoing (1) and the process (the settlement process) of the foregoing (2) or the process (the authentication process) of the foregoing (1) to the process (the management process) of the foregoing (3) causing the computer to function as the settlement management apparatus according to the embodiment, the settlement management system through which settlement of one bill can be allotted among and performed by the plurality of users is realized.

By causing a computer to execute a program (for example, a program functioning as the processing unit 210 illustrated in FIG. 15) functioning as the information processing apparatus according to the embodiment, for example, the settlement management apparatus according to the embodiment can generate the virtual money collection container according to the embodiment. By causing a computer to execute the program functioning as the information processing apparatus according to the embodiment, the settlement management system through which settlement of one bill can be allotted among and performed by the plurality of users is realized.

The preferred embodiments of the present disclosure have been described above with reference to the accompanying drawings, whilst the present invention is not limited to the above examples, of course. A person skilled in the art may find various alternations and modifications within the scope of the appended claims, and it should be understood that they will naturally come under the technical scope of the present disclosure.

For example, the programs (computer programs) causing a computer to function as the settlement management apparatus according to the embodiment or the programs (computer programs) causing a computer to function as the information processing apparatus according to the embodiment has been provided above. However, the embodiment can provide a recording medium storing each of the foregoing programs or all of the foregoing programs together.

The above-described configurations express examples of the embodiment and, of course, pertain to the technical scope of the present disclosure.

Additionally, the present technology may also be configured as below.
(1)
   A settlement management apparatus that performs a process related to settlement using an electronic value associated with a virtual money collection container in which a plurality of managers related to the settlement are set.
(2)
   The settlement management apparatus according to (1), including:
   an authentication unit configured to authenticate each of the managers; and
   a processing unit configured to perform the process related to the settlement when authentication for each of the managers is completed.
(3)
   The settlement management apparatus according to (2), wherein the authentication unit authenticates the managers based on identification information indicating the managers.
(4)
   The settlement management apparatus according to (3), wherein the authentication unit authenticates the managers by matching the stored identification information to the acquired identification information.
(5)
   The settlement management apparatus according to (3), wherein the authentication unit authenticates the managers by generating authentication information from the acquired identification information and matching authentication information based on the stored identification information to the generated authentication information.
(6)
   The settlement management apparatus according to (4) or (5), wherein the authentication unit authenticates the managers using the identification information acquired in advance.
(7)
   The settlement management apparatus according to (3), wherein the authentication unit authenticates the managers by matching authentication information based on the stored identification information to authentication information based on the acquired identification information.
(8)
   The settlement management apparatus according to (7), wherein the authentication unit authenticates the managers using the authentication information acquired in advance.
(9)
   The settlement management apparatus according to any one of (2) to (8), wherein the processing unit retains the virtual money collection container when the process related to the settlement is completed.
(10)
   The settlement management apparatus according to (9), wherein the processing unit deletes the virtual money collection container when the process related to the settlement is completed and an amount of the electronic value is zero.
(11)
   The settlement management apparatus according to (9) or (10),
   wherein an effective number of settlements is set in the virtual money collection container, and
   wherein the processing unit updates the number of settlements for the virtual money collection container whenever the process related to the settlement is completed, and
   wherein the processing unit deletes the virtual money collection container when the number of settlements is equal to or greater than the effective number of settlements or the number of settlements is greater than the effective number of settlements.
(12)
   The settlement management apparatus according to any one of (9) to (11), wherein the processing unit changes the managers set in the virtual money collection container when the process related to the settlement is completed.
(13)
   The settlement management apparatus according to any one of (2) to (8), wherein the processing unit moves the electronic value to a storage location corresponding to the set specific manager when the process related to the settlement is completed.
(14)
   The settlement management apparatus according to any one of (1) to (13), further including:
   a management unit configured to manage the virtual money collection container.
(15)
   An information processing apparatus including:
   a processing unit configured to generate a virtual money collection container in which a plurality of managers related to settlement are set.
(16)
   A settlement management method including:
   a step of performing a process related to settlement using an electronic value associated with a virtual money collection container in which a plurality of managers related to the settlement are set.
(17)
   A settlement management system including:
   a settlement management apparatus configured to perform a process related to settlement using an electronic value associated with a virtual money collection container in which a plurality of managers related to the settlement are set; and
   a manager apparatus capable of communicating with the settlement management apparatus, the manager apparatus being configured to serve as the plurality of managers,
   wherein the settlement management apparatus includes
      an authentication unit configured to authenticate each of the managers, and
      a processing unit configured to perform the process related to the settlement when authentication for each of the managers is completed.

### Reference Signs List

- 100: settlement management apparatus
- 102, 202: communication unit
- 104: storage unit
- 106, 204: control unit
- 110: authentication unit
- 112, 210: processing unit
- 114: management unit
- 200, 200A, 200B, 200C: information processing apparatus
- 1000: settlement management system

## Claims

1. A settlement management apparatus that performs a process related to settlement using an electronic value associated with a virtual money collection container in which a plurality of managers related to the settlement are set.

2. The settlement management apparatus according to claim 1, comprising:
an authentication unit configured to authenticate each of the managers; and
a processing unit configured to perform the process related to the settlement when authentication for each of the managers is completed.

3. The settlement management apparatus according to claim 2, wherein the authentication unit authenticates the managers based on identification information indicating the managers.

4. The settlement management apparatus according to claim 3, wherein the authentication unit authenticates the managers by matching the stored identification information to the acquired identification information.

5. The settlement management apparatus according to claim 3, wherein the authentication unit authenticates the managers by generating authentication information from the acquired identification information and matching authentication information based on the stored identification information to the generated authentication information.

6. The settlement management apparatus according to claim 4, wherein the authentication unit authenticates the managers using the identification information acquired in advance.

7. The settlement management apparatus according to claim 3, wherein the authentication unit authenticates the managers by matching authentication information based on the stored identification information to authentication information based on the acquired identification information.

8. The settlement management apparatus according to claim 7, wherein the authentication unit authenticates the managers using the authentication information acquired in advance.

9. The settlement management apparatus according to claim 2, wherein the processing unit retains the virtual money collection container when the process related to the settlement is completed.

10. The settlement management apparatus according to claim 9, wherein the processing unit deletes the virtual money collection container when the process related to the settlement is completed and an amount of the electronic value is zero.

11. The settlement management apparatus according to claim 9,
wherein an effective number of settlements is set in the virtual money collection container, and
wherein the processing unit updates the number of settlements for the virtual money collection container whenever the process related to the settlement is completed, and
wherein the processing unit deletes the virtual money collection container when the number of settlements is equal to or greater than the effective number of settlements or the number of settlements is greater than the effective number of settlements.

12. The settlement management apparatus according to claim 9, wherein the processing unit changes the managers set in the virtual money collection container when the process related to the settlement is completed.

13. The settlement management apparatus according to claim 2, wherein the processing unit moves the electronic value to a storage location corresponding to the set specific manager when the process related to the settlement is completed.

14. The settlement management apparatus according to claim 1, further comprising:
a management unit configured to manage the virtual money collection container.

15. An information processing apparatus comprising:
a processing unit configured to generate a virtual money collection container in which a plurality of managers related to settlement are set.

16. A settlement management method comprising:
a step of performing a process related to settlement using an electronic value associated with a virtual money collection container in which a plurality of managers related to the settlement are set.

17. A settlement management system comprising:
a settlement management apparatus configured to perform a process related to settlement using an electronic value associated with a virtual money collection container in which a plurality of managers related to the settlement are set; and
a manager apparatus capable of communicating with the settlement management apparatus, the manager apparatus being configured to serve as the plurality of managers,
wherein the settlement management apparatus includes
an authentication unit configured to authenticate each of the managers, and
a processing unit configured to perform the process related to the settlement when authentication for each of the managers is completed.
